(19) Europäisches Patentamt
European Patent Office
Office européen des brevets

(11) **EP 1 677 483 B1**

(12) **EUROPÄISCHE PATENTSCHRIFT**

(45) Veröffentlichungstag und Bekanntmachung des Hinweises auf die Patenterteilung:
**19.08.2015 Patentblatt 2015/34**

(51) Int Cl.:
***H04L 29/06*** *(2006.01)*

(21) Anmeldenummer: **05090361.6**

(22) Anmeldetag: **28.12.2005**

(54) **Verfahren zum Aufbereiten von Daten für das Laden in eine Datenverarbeitungseinrichtung**

Method for preparing data for loading into a data processing unit

Procédé destiné à la préparation de données pour le chargement dans un dispositif de traitement de données

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.12.2004 DE 102004063812**

(43) Veröffentlichungstag der Anmeldung:
**05.07.2006 Patentblatt 2006/27**

(73) Patentinhaber: **Francotyp-Postalia GmbH**
**13089 Berlin (DE)**

(72) Erfinder: **Rosenau, Dirk**
**13469 Berlin (DE)**

(74) Vertreter: **Cohausz & Florack**
**Patent- & Rechtsanwälte**
**Partnerschaftsgesellschaft mbB**
**Postfach 10 18 30**
**40009 Düsseldorf (DE)**

(56) Entgegenhaltungen:
**WO-A-02/01464      US-A- 5 864 678**

- **NINGNING HU: "Network Aware Data Transmission with Compression" THE 4TH ANNUAL CMU SYMPOSIUM ON COMPUTER SYSTEMS, [Online] 6. Oktober 2001 (2001-10-06), XP002377617 Gefunden im Internet: URL:http://gs274.sp.cs.cmu.edu/www/papers/ socs.pdf> [gefunden am 2006-04-19]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Aufbereiten von Daten für das Laden von einer ersten Datenverarbeitungseinrichtung über eine erste Datenverbindung in eine zweite Datenverarbeitungseinrichtung, bei dem in wenigstens einem Paketierungsschritt aus den in die zweite Datenverarbeitungseinrichtung zu ladenden ersten Daten in eine Mehrzahl von versandfertigen Versanddatenpaketen erzeugt werden. Sie betrifft weiterhin eine Anordnung zum Laden von Daten, mit der sich das erfindungsgemäße Verfahren durchführen lässt.

Beim Laden von Daten von einer ersten Datenverarbeitungseinrichtung in eine zweite Datenverarbeitungseinrichtung werden die zu übermittelnden Daten in der Regel in eines oder mehrere kleinere Pakete unterteilt und an die zweite Datenverarbeitungseinrichtung übermittelt. Häufig werden dabei die Teildaten, welche die Datenpakete bilden, nach einem starren Schema komprimiert, um die Gesamtladezeit bis zum vollständigen Zurverfügungstellen, also der vollständigen Nutzbarkeit, der Daten in der zweiten Datenverarbeitungseinrichtung zu verkürzen. Ebenso ist es bekannt, die Datenteile der Datenpakete - wiederum nach einem starren Schema - in Abhängigkeit von der resultierenden Größe der Datenpakete komprimiert oder unkomprimiert zu versenden.

Für eine Kommunikation mit einer oder mehreren zweiten Datenverarbeitungseinrichtung gleichen Typs mag dies zwar eine gangbare Vorgehensweise sein. Beim Laden von Daten von einer ersten Datenverarbeitungseinrichtung in zweite Datenverarbeitungseinrichtungen unterschiedlichen Typs besteht jedoch häufig das Problem, dass abhängig von der Übertragungsgeschwindigkeit der betreffenden Datenverbindung und der Verarbeitungsgeschwindigkeit der übertragenen Daten in der zweiten Datenverarbeitungseinrichtung stark unterschiedliche Gesamtladezeiten bis zum vollständigen Zurverfügungstellen der Daten in der zweiten Datenverarbeitungseinrichtung erzielt werden. Insbesondere kann es dabei in Abhängigkeit von der Leistung der zweiten Datenverarbeitungseinrichtung trotz Kompression der Daten zu einer vergleichsweise hohen Gesamtladezeit kommen.

Wie sich gezeigt hat, liegt dies daran, dass die zweite Datenverarbeitungseinrichtung bei einer geringen Verarbeitungsgeschwindigkeit der komprimierten Daten den Geschwindigkeitsvorteil aufgrund der schnelleren Übertragung der komprimierten Pakete aufhebt oder gar ins Gegenteil verkehrt. Insbesondere bei geringer Prozessorleistung und/oder geringer Übertragungsgeschwindigkeit innerhalb der zweiten Datenverarbeitungseinrichtung kann dies der Fall sein.

Der vorliegenden Erfindung liegt daher die Aufgabe zu Grunde, ein Verfahren bzw. eine Anordnung der eingangs genannten Art zur Verfügung zu stellen, welches bzw. welche die oben genannten Nachteile nicht oder zumindest in geringerem Maße aufweist und insbesondere unabhängig von der Leistungsfähigkeit der Datenübertragung und der zweiten Datenverarbeitungseinrichtung möglichst kurze Gesamtladezeiten ermöglicht.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin ausgehend von einer Anordnung gemäß dem Oberbegriff des Anspruchs 27 durch die im kennzeichnenden Teil des Anspruchs 27 angegebenen Merkmale.

Der vorliegenden Erfindung liegt die technische Lehre zu Grunde, dass man unabhängig von der Leistungsfähigkeit der Datenübertragung bzw. der zweiten Datenverarbeitungseinrichtung möglichst kurze Gesamtladezeiten erzielen kann, wenn in einem dem Paketierungsschritt vorangehenden Ermittlungsschritt wenigstens ein die Ladezeit bis zum vollständigen Laden der ersten Daten in die zweite Datenverarbeitungseinrichtung zumindest beeinflussender erster Ladeparameter ermittelt wird und die Erzeugung der Versanddatenpakete in dem wenigstens einen Paketierungsschritt in Abhängigkeit von dem ersten Ladeparameter erfolgt.

Durch die Ermittlung des wenigstens einen Ladeparameters und Erzeugung der Versanddatenpakete in Abhängigkeit von dem Ladeparameter ist es möglich, auf Besonderheiten der aktuellen Konstellation zu reagieren und in Abhängigkeit hiervon eine optimierte Aufbereitung, insbesondere eine im Hinblick auf eine möglichst schnelle Verfügbarkeit der ersten Daten in der zweiten Datenverarbeitungseinrichtung optimierte Aufteilung, der ersten Daten in die Versanddatenpakete zu realisieren.

Als erster Ladeparameter kommen grundsätzlich beliebige Parameter der zweiten Datenverarbeitungseinrichtung aber auch der ersten Datenverbindung in Betracht, welche einen Einfluss auf die Gesamtladezeit der ersten Daten in die zweite Datenverarbeitungseinrichtung haben.

Bevorzugt wird in dem Ermittlungsschritt als erster Ladeparameter eine in der zweiten Datenverarbeitungseinrichtung für die Verarbeitung der Versanddatenpakete maximal zur Verfügung stehende Speicherkapazität ermittelt. Diese bestimmt letztlich die maximale Größe der von der zweiten Datenverarbeitungseinrichtung verarbeitbaren Datenpakete. Würde diese überschritten, müsste die zweite Datenverarbeitungseinrichtung andere Speicherbereiche auf Kosten der erzielbaren Verarbeitungsgeschwindigkeit nutzen oder die Datenpakete zurückweisen, wodurch sich die Gesamtladezeit erheblich verlängert.

Zusätzlich oder alternativ kann als erster Ladeparameter wenigstens ein für die Übertragungsgeschwindigkeit zwischen der ersten und zweiten Datenverarbeitungseinrichtung repräsentativer Übertragungsgeschwindigkeitswert ermittelt werden. In Abhängigkeit von diesem Übertragungsgeschwindigkeitswert kann dann gegebenenfalls eine optimale Paketgröße ermittelt werden, welche eine möglichst schnelle Übertragung gewährleistet.

Zusätzlich oder alternativ kann als erster Ladeparameter ein für die Verarbeitungsgeschwindigkeit der Versanddatenpakete in der zweiten Datenverarbeitungseinrichtung repräsentativer Verarbeitungsgeschwindigkeitswert ermittelt werden. Dieser beeinflusst zu einem erheblichen Maß die Gesamtladezeit.

Schließlich kann als erster Ladeparameter zusätzlich oder alternativ ein für den Typ der ersten Daten repräsentativer Datentypwert ermittelt werden. Dieser Datentyp kann ebenfalls insoweit Einfluss auf die Gesamtladezeit haben, als er beispielsweise einen Hinweis auf die Kompressibilität der ersten Daten liefert. Lassen die ersten Daten aufgrund ihres Typs beispielsweise nur einen geringen Kompressionsgrad zu, so kann es durchaus sein, dass der Geschwindigkeitsnachteil durch die infolge der Kompression erforderliche zusätzliche Verarbeitungzeit den Geschwindigkeitsvorteil bei der Übertragung mehr als aufwiegt.

Die Ermittlung des wenigstens einen ersten Ladeparameters kann grundsätzlich auf beliebige geeignete Weise erfolgen. So ist bei bevorzugten Varianten des erfindungsgemäßen Verfahrens vorgesehen, dass der wenigstens eine erste Ladeparameter in Abhängigkeit von der ersten Datenverbindung und/oder der zweiten Datenverarbeitungseinrichtung aus einem ersten Speicher der ersten Datenverarbeitungseinrichtung ausgelesen wird. In diesem ersten Speicher können beispielsweise entsprechende Tabellen oder dergleichen abgelegt sein, anhand derer die erste Datenverarbeitungseinrichtung den bzw. die entsprechenden ersten Ladeparameter ermitteln kann.

Der gespeicherte erste Ladeparameter bzw. die gespeicherten ersten Ladeparameter können dabei vorab für jede mögliche einzelne zweite Datenverarbeitungseinrichtung oder die möglichen Typen der zweiten Datenverarbeitungseinrichtung experimentell oder rechnerisch aus technischen Daten der betreffenden zweiten Datenverarbeitungseinrichtung ermittelt worden sein. Größen, die Einfluss auf die Verarbeitungsgeschwindigkeit der zweiten Datenverarbeitungseinrichtung haben, sind beispielsweise die verfügbare Datenbusbreite (32 Bit, 16 Bit, 8 Bit), Typen, Größen und Zugriffszeiten der RAM- und ROM-Bausteine der zweiten Datenverarbeitungseinrichtung, Prozessorfrequenz, Cache-Größe, DMA-Belastung etc.

Weiterhin versteht es sich insbesondere, dass die ersten Ladeparameter, insbesondere kontinuierlich, aktualisiert werden können. Insbesondere kann dies anhand von Rückmeldungen für abgeschlossene Ladevorgänge mit der jeweiligen zweiten Datenverarbeitungseinrichtung oder einer zweiten Datenverarbeitungseinrichtung des jeweiligen registrierten Typs erfolgen.

Bei anderen Varianten der Erfindung kann der wenigstens eine erste Ladeparameter aber gegebenenfalls auch von der zweiten Datenverarbeitungseinrichtung stammen. So kann er beispielsweise ausgelöst durch eine entsprechende Anfrage der ersten Datenverarbeitungseinrichtung and die zweite Datenverarbeitungseinrichtung an die erste Datenverarbeitungseinrichtung übermittelt werden. Ebenso kann ihn die zweite Datenverarbeitungseinrichtung von sich aus schon an die erste Datenverarbeitungseinrichtung übermitteln.

Bei weiteren vorteilhaften Varianten des erfindungsgemäßen Verfahrens erfolgt die Ermittlung des wenigstens einen Ladeparameters zumindest einmalig, vorzugsweise aber bei jeder neuen Transaktion, experimentell. Vorzugsweise wird hierzu in dem Ermittlungsschritt in einem ersten Testschritt aus einer ersten Testdatenmenge wenigstens ein erstes Testdatenpaket gebildet und zur Ermittlung des wenigstens einen Ladeparameters an die zweite Datenverarbeitungseinrichtung übermittelt. Aus dem Ablauf der Übermittlung und Verarbeitung des Testdatenpakets lassen sich dann Rückschlüsse auf den bzw. die betreffenden Ladeparameter ziehen.

Bevorzugt wird in dem ersten Testschritt die erste Übermittlungszeit bis zum vollständigen Übermitteln des ersten Testdatenpakets an die zweite Datenverarbeitungseinrichtung ermittelt. Aus der ersten Übermittlungszeit wird dann ein für die Übertragungsgeschwindigkeit des ersten Testdatenpakets zwischen der ersten und zweiten Datenverarbeitungseinrichtung repräsentativer erster Übertragungsgeschwindigkeitswert ermittelt. Dieser hat wie oben ausgeführt als erster Ladeparameter Einfluss auf die Gesamtladezeit und kann in vorteilhafter Weise bei der Aufteilung der ersten Daten berücksichtigt werden.

Weiter vorzugsweise wird in einem zweiten Testschritt die erste Verarbeitungszeit bis zum vollständigen Zurverfügungstellen des empfangenen ersten Testdatenpakets in der zweiten Datenverarbeitungseinrichtung ermittelt. Aus der ersten Verarbeitungszeit wird dann ein für die Verarbeitungsgeschwindigkeit von ersten Datenpaketen in der zweiten Datenverarbeitungseinrichtung repräsentativer erster Verarbeitungsgeschwindigkeitswert ermittelt. Auch dieser hat wie oben ausgeführt als erster Ladeparameter Einfluss auf die Gesamtladezeit und kann dann ebenfalls in vorteilhafter Weise bei der Aufteilung der ersten Daten berücksichtigt werden.

Bei besonders vorteilhaften Ausführungen des erfindungsgemäßen Verfahrens wird in dem Ermittlungsschritt in einem dritten Testschritt aus der ersten Testdatenmenge ein zweites Testdatenpaket gebildet und zur Ermittlung des wenigstens einen Ladeparameters an die zweite Datenverarbeitungseinrichtung übermittelt. Dieses zweite Testdatenpaket kann auf andere Weise als das ersten Testdatenpaket gebildet worden sein und ermöglicht anhand der mit ihm ermittelten ersten Ladeparameter einen Vergleich und eine Optimierung der Aufteilung der ersten Daten.

Vorzugsweise wird daher in dem dritten Testschritt die zweite Übermittlungszeit bis zum vollständigen Übermitteln des zweiten Testdatenpakets an die zweite Datenverarbeitungseinrichtung ermittelt. Aus der zweiten Übermittlungszeit wird dann ein für die Übertragungsgeschwindigkeit des zweiten Testdatenpakets zwischen der ersten und zweiten Datenverarbeitungseinrichtung repräsentativer zweiter Übertragungsgeschwindigkeitswert ermittelt. Somit ist ein Vergleich der Übertragungsgeschwindigkeitswerte für die unterschiedlichen Testdatenpakete möglich.

Weiter vorzugsweise wird in einem vierten Testschritt die zweite Verarbeitungszeit bis zum vollständigen Zurverfügungstellen des empfangenen zweiten Testdatenpakets in der zweiten Datenverarbeitungseinrichtung ermittelt. Aus der zweiten Verarbeitungszeit wird dann ein für die Verarbeitungsgeschwindigkeit von zweiten Datenpaketen in der zweiten Datenverarbeitungseinrichtung repräsentativer zweiter Verarbeitungsgeschwindigkeitswert ermittelt. Somit ist ein Vergleich der Verarbeitungsgeschwindigkeit für die unterschiedlichen Testdatenpakete möglich.

Das zweite Testdatenpaket kann auf beliebige geeignete Weise abweichend von dem ersten Testdatenpaket generiert werden. Bevorzugt wird das zweite Datenpaket in dem dritten Teilschritt unter Kompression der ersten Testdatenmenge erzeugt. Hierdurch ist ein Vergleich der Ladeparameter für komprimierte und nicht komprimierte Testdatenpakete möglich.

Bevorzugt wird in dem wenigstens einen Paketierungsschritt in einem ersten Teilschritt aus einer ersten Datenteilmenge der ersten Daten wenigstens ein erstes Datenpaket erzeugt. In einem zweiten Teilschritt erfolgt dann unter Verwendung des wenigstens einen ersten Ladeparameters für das erste Datenpaket eine erste Abschätzung der ersten Ladezeit des ersten Datenpakets. Hieraus lassen sich dann besonders einfach Rückschlüsse auf die Gesamtladezeit ziehen.

Weiter vorzugsweise wird in einem dritten Teilschritt die in dem zweiten Teilschritt ermittelte erste Ladezeit in einem Ladezeitvergleich mit einem Ladezeitvergleichswert verglichen. In einem vierten Teilschritt erfolgt dann in Abhängigkeit von dem Ergebnis des Ladezeitvergleichs eine Auswahl des ersten Datenpakets als Versanddatenpaket.

Hierbei kann es insbesondere vorgesehen sein, dass in dem Ladezeitvergleichs der Vergleich mit einem bestimmten Schwellenwert als Ladezeitvergleichswert vorgenommen wird. Liegt die erste Ladezeit dann beispielsweise unter einem solchen vorgegebenen Ladezeitvergleichswert, erfolgt die Auswahl des ersten Datenpakets als Versanddatenpaket. Ist dies nicht der Fall, kann entsprechend reagiert werden, beispielweise eine Neubestimmung der ersten Datenteilmenge erfolgen oder eine andere Aufbereitung der ersten Datenteilmenge erfolgen.

Bevorzugt wird in dem ersten Teilschritt aus der ersten Datenteilmenge ein zweites Datenpaket erzeugt. In dem zweiten Teilschritt erfolgt dann unter Verwendung des wenigstens einen ersten Ladeparameters für das zweite Datenpaket eine zweite Abschätzung der zweiten Ladezeit des zweiten Datenpakets. Hierdurch ist ein unmittelbarer Vergleich der Ladezeiten des ersten und zweiten Datenpakets möglich, sodass vorzugsweise in dem dritten Teilschritt die in dem zweiten Teilschritt ermittelte zweite Ladezeit als Ladezeitvergleichswert verwendet wird und in dem vierten Teilschritt in Abhängigkeit von dem Ergebnis des Ladezeitvergleichs eine Auswahl des ersten Datenpakets oder des zweiten Datenpakets als Versanddatenpaket erfolgt. Bevorzugt wird dabei natürlich dasjenige Datenpaket mit der kleineren Ladezeit als Versanddatenpaket ausgewählt.

Das zweite Datenpaket kann dabei auf beliebige geeignete Weise abweichend von dem ersten Datenpaket generiert werden. Bevorzugt wird das zweite Datenpaket in dem ersten Teilschritt wiederum unter Kompression der ersten Datenteilmenge erzeugt, um einen unmittelbaren Vergleich beider Aufbereitungsvarianten zu ermöglichen.

Bei besonders vorteilhaften Varianten des erfindungsgemäßen Verfahrens ist vorgesehen, dass in dem Ermittlungsschritt als erster Ladeparameter eine in der zweiten Datenverarbeitungseinrichtung für die Verarbeitung der Versanddatenpakete maximal zur Verfügung stehende Speicherkapazität ermittelt wird. In dem ersten Teilschritt wird dann die Speicherkapazitätssumme aus der für die Speicherung des ersten Datenpakets erforderlichen ersten Speicherkapazität und der für die Speicherung des zweiten Datenpakets erforderlichen zweiten Speicherkapazität gebildet. Die Speicherkapazitätssumme wird mit der maximal zur Verfügung stehenden Speicherkapazität verglichen. Für den Fall einer die maximal zur Verfügung stehende Speicherkapazität übersteigenden Speicherkapazitätssumme wird dann ein neues erstes Datenpaket und eine neues zweites Datenpaket erzeugt, wobei die erste Datenteilmenge reduziert und/oder die Kompressionsrate bei der Erzeugung des zweiten Datenpakets erhöht wird. Hierdurch kann sichergestellt werden, dass die maximal in der zweiten Datenverarbeitungseinrichtung zur Verfügung stehende Speicherkapazität nicht überschritten wird, womit eine reibungslose Verarbeitung in der zweiten Datenverarbeitungseinrichtung gewährleistet ist.

Bei besonders bevorzugten Varianten des erfindungsgemäßen Verfahrens erfolgt eine Optimierung, d. h. Minimierung der Gesamtladezeit. Vorzugsweise ist hierzu ein erster Optimierungsschritt vorgesehen. Hierbei erfolgt in einem ersten Optimierungsteilschritt eine dritte Abschätzung der ersten Gesamtladezeit der ersten Daten bei einer Aufteilung der ersten Daten in erste Datenpakete der Größe der ersten Datenteilmenge. In einem zweiten Optimierungsteilschritt erfolgt dann eine Variation der ersten Datenteilmenge. In einem dritten Optimierungsteilschritt wird dann die dritte Abschätzung mit ersten Datenpaketen der Größe der neuen ersten Datenteilmenge wiederholt. In einem vierten Optimierungsteilschritt wird schließlich die ermittelte neue erste Gesamtladezeit in einem ersten Gesamtladezeitvergleich mit der ermittelten vorherigen ersten Gesamtladezeit verglichen. In Abhängigkeit von dem Vergleich kann dann in vorteilhafter Weise eine Optimierung der Gesamtladezeit erfolgen.

Vorzugsweise erfolgt in dem ersten Optimierungsschritt in einem fünften Optimierungsteilschritt zur Reduzierung der ersten Gesamtladezeit eine weitere Variation der ersten Datenteilmenge in Abhängigkeit von dem Ergebnis des ersten Gesamtladezeitvergleichs. In einem sechsten Optimierungsteilschritt wird dann zumindest der vierte Optimierungsteilschritt wiederholt. Bevorzugt werden der fünfte und sechste Optimierungsteilschritt so lange wiederholt, bis sich die erste Gesamtladezeit mit einer vorgebbaren Toleranz an ein erstes Minimum angenähert hat. Dabei kann vorgesehen sein, dass die Toleranz ausreichend groß gewählt ist, um schon nach wenigen Variationen zu einem Abschluss der Optimierung zu gelangen.

Die Optimierung kann isoliert für eine einzige Art der Aufbereitung der ersten Daten erfolgen. Bei besonders vorteilhaften Varianten der Erfindung werden bei der Optimierung unterschiedliche Arten der Aufbereitung der ersten Daten mit einander verglichen bzw. berücksichtigt.

Vorzugsweise erfolgt dabei in einem zweiten Optimierungsschritt in einem siebten Optimierungsteilschritt eine vierte Abschätzung der zweiten Gesamtladezeit der ersten Daten bei einer Aufteilung der ersten Daten in zweite Datenpakete einer von der Größe der ersten Datenteilmenge abweichenden Größe. In einem achten Optimierungsteilschritt erfolgt dann eine Variation der ersten Datenteilmenge. In einem neunten Optimierungsteilschritt wird die vierte Abschätzung mit zweiten Datenpaketen der Größe der neuen ersten Datenteilmenge wiederholt. In einem zehnten Optimierungsteilschritt wird die ermittelte neue Gesamtladezeit in einem zweiten Gesamtladezeitvergleich mit der ermittelten vorherigen zweiten Gesamtladezeit verglichen.

Vorzugsweise erfolgt in dem zweiten Optimierungsschritt in einem elften Optimierungsteilschritt zur Reduzierung der zweiten Gesamtladezeit eine weitere Variation der ersten Datenteilmenge in Abhängigkeit von dem Ergebnis des zweiten Gesamtladezeitvergleichs. In einem zwölften Optimierungsteilschritt wird dann zumindest der zehnte Optimierungsteilschritt wiederholt. Vorzugsweise werden der elfte und zwölfte Optimierungsteilschritt so lange wiederholt, bis sich die zweite Gesamtladezeit mit einer vorgebbaren Toleranz an ein zweites Minimum angenähert hat. Auch hier kann vorgesehen sein, dass die Toleranz ausreichend groß gewählt ist, um schon nach wenigen Variationen zu einem Abschluss der Optimierung zu gelangen.

Bei besonders vorteilhaften Varianten des erfindungsgemäßen Verfahrens ist dann vorgesehen, dass das erste Minimum und das zweite Minimum in einem dreizehnten Optimierungsteilschritt miteinander verglichen werden und als Versanddatenpaket das Datenpaket mit der geringsten Gesamtladezeit ausgewählt wird.

Die vorliegende Erfindung betrifft weiterhin ein Verfahren zum Laden von ersten Daten von einer ersten Datenverarbeitungseinrichtung über eine erste Datenverbindung in eine zweite Datenverarbeitungseinrichtung, bei dem die ersten Daten in einem Aufbereitungsschritt für das Laden aufbereitet werden und in einem Ladeschritt in die zweite Datenverarbeitungseinrichtung geladen werden, wobei die Aufbereitung der ersten Daten in dem Aufbereitungsschritt mit einem Verfahren nach einem der vorhergehenden Ansprüche erfolgt. Die oben geschilderten Vorteile des erfindungsgemäßen Verfahrens zur Aufbereitung der Daten kommen hierbei in demselben Maße zum Tragen.

Vorzugsweise wird das jeweilige Versanddatenpaket in dem Aufbereitungsschritt mit einer Paketbeschreibung versehen und in dem Ladeschritt nach dem Empfang in der zweiten Datenverarbeitungseinrichtung in Abhängigkeit von der Paketbeschreibung verarbeitet. Hierdurch ist eine einfache und schnelle, aufbereitungsgerechte Verarbeitung der Versanddatenpakete in der zweiten Datenverarbeitungseinrichtung möglich.

Die vorliegende Erfindung betrifft weiterhin eine Anordnung zum Laden von Daten von einer ersten Datenverarbeitungseinrichtung in eine zweite Datenverarbeitungseinrichtung, mit einer ersten Datenverarbeitungseinrichtung und einer über eine erste Datenverbindung mit der ersten Datenverarbeitungseinrichtung verbindbaren zweiten Datenverarbeitungseinrichtung. Die erste Datenverarbeitungseinrichtung ist zum Erzeugen einer Mehrzahl von versandfertigen Versanddatenpaketen aus den in die zweite Datenverarbeitungseinrichtung zu ladenden ersten Daten ausgebildet. Erfindungsgemäß ist die erste Datenverarbeitungseinrichtung dabei zur Ermittlung wenigstens eines die Gesamtladezeit bis zum vollständigen Laden der ersten Daten in die zweite Datenverarbeitungseinrichtung beeinflussenden ersten Ladeparameters ausgebildet. Weiterhin ist die erste Datenverarbeitungseinrichtung zur Erzeugung der Versanddatenpakete in Abhängigkeit von dem ersten Ladeparameter ausgebildet.

Mit dieser Anordnung lässt sich das erfindungsgemäße Verfahren durchführen. Mit ihr lassen sich die oben beschriebenen Varianten und Vorteile in demselben Maße realisieren, sodass diesbezüglich auf die obigen Ausführungen verwiesen wird.

Bei bevorzugten Varianten der erfindungsgemäßen Anordnung weist die erste Datenverarbeitungseinrichtung einen ersten Speicher auf, in dem eine Mehrzahl erster Ladeparameter gespeichert sind. Die erste Datenverarbeitungseinrichtung ist dann zum Auslesen des wenigstens einen ersten Ladeparameters in Abhängigkeit von der ersten Datenverbindung und/oder der zweiten Datenverarbeitungseinrichtung aus einem ersten Speicher ausgebildet.

Bei Varianten der erfindungsgemäßen Anordnung mit der oben geschilderten experimentellen Ermittlung des wenigstens einen ersten Ladeparameters kann die Ermittlung der hierfür erforderlichen Werte sowohl durch die erste Datenverarbeitungseinrichtung als auch die zweite Datenverarbeitungseinrichtung jeweils alleine oder gemeinsam erfolgen. Mit anderen Worten kann die erste Datenverarbeitungseinrichtung und/oder die zweite Datenverarbeitungseinrichtung zur Vornahme der oben geschilderten Verfahrensschritte ausgebildet sein.

Die vorliegende Erfindung lässt sich im Zusammenhang mit beliebigen Anwendungen einsetzen, bei denen Daten von einer ersten Datenverarbeitungseinrichtung in eine zweite Datenverarbeitungseinrichtung geladen werden sollen. Wegen der Vielzahl der zu versorgenden unterschiedlichen zweiten Datenverarbeitungseinrichtungen mit unterschiedlichen Leistungsmerkmalen, lässt sie sich besonders vorteilhaft im Zusammenhang mit dem Laden von Daten von beispielsweise einer entfernten Datenzentrale in unterschiedliche Frankiermaschinen einsetzen.

Die vorliegende Erfindung betrifft weiterhin eine Datenverarbeitungseinrichtung, die als erste Datenverarbeitungseinrichtung für eine erfindungsgemäße Anordnung ausgebildet ist. Schließlich betrifft sie eine Datenverarbeitungseinrichtung, die als zweite Datenverarbeitungseinrichtung für eine erfindungsgemäße Anordnung ausgebildet ist.

Weitere bevorzugte Ausgestaltungen der Erfindung ergeben sich aus den Unteransprüchen bzw. der nachstehenden Beschreibung eines bevorzugten Ausführungsbeispiels, welche auf die beigefügten Zeichnungen Bezug nimmt. Es zeigen

Figur 1     eine schematische Darstellung einer bevorzugten Ausführungsform der erfindungsgemäßen Anordnung, mit der eine bevorzugten Ausführungsform des erfindungsgemäßen Verfahrens zum Aufbereiten von Daten und des erfindungsgemäßen Verfahrens zum Laden von Daten durchgeführt werden kann;

Figur 2     ein schematisches Ablaufdiagramm einer bevorzugten Ausführungsform des erfindungsgemäßen Verfahrens zum Laden von Daten unter Verwendung einer bevorzugten Ausführungsform des erfindungsgemäßen Verfahrens zum Aufbereiten von Daten, die mit der Anordnung aus Figur 1 durchgeführt wird;

Figur 3     eine schematische Darstellung eines Details des Ablaufdiagramms aus Figur 2;

Figur 4     ein schematisches Ablaufdiagramm einer weiteren bevorzugten Ausführungsform des erfindungsgemäßen Verfahrens zum Laden von Daten unter Verwendung einer bevorzugten Ausführungsform des erfindungsgemäßen Verfahrens zum Aufbereiten von Daten, die mit der Anordnung aus Figur 1 durchgeführt werden kann;

Figur 5     eine schematische Darstellung eines Details des Ablaufdiagramms aus Figur 4;

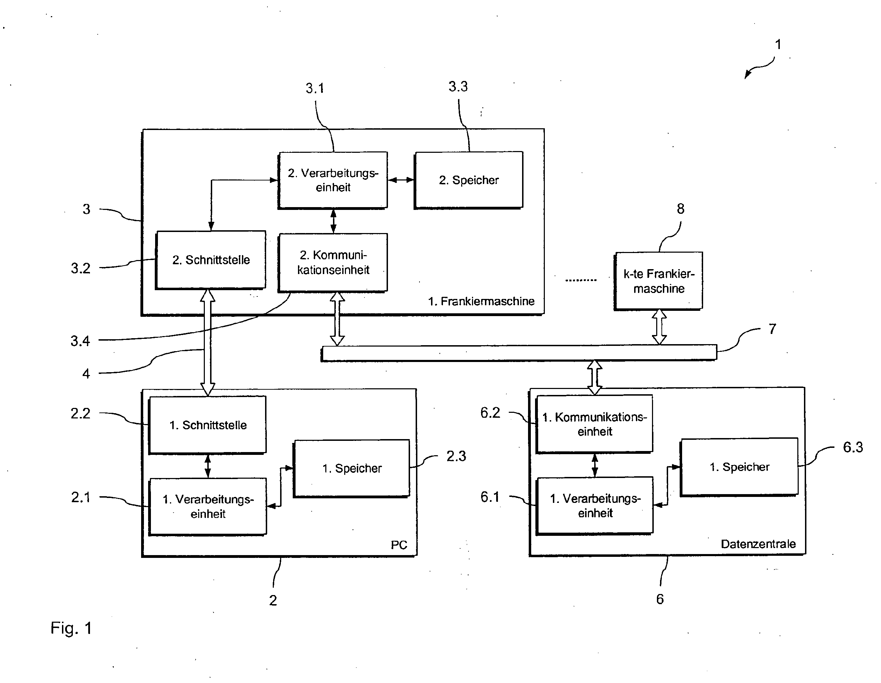

Figur 1 zeigt eine schematische Darstellung einer erfindungsgemäßen Anordnung 1 mit einer ersten Datenverarbeitungseinrichtung in Form eines Personalcomputers (PC) 2 und einer zweiten Datenverarbeitungseinrichtung in Form einer Frankiermaschine 3.

Der PC 2 weist eine erste Verarbeitungseinheit 2.1 auf, die mit einer ersten Schnittstelle 2.2 und einem ersten Speicher 2.3 verbunden ist. Die Frankiermaschine 3 weist eine zweite Verarbeitungseinheit 3.1 auf, die mit einer zweiten Schnittstelle 3.2 und einem zweiten Speicher 3.3 verbunden ist.

Bei dem PC 2 handelt es sich um einen PC eines Servicetechnikers, mit dem erste Daten in Form eines bestimmten Dienstprogramms gemäß einer Variante des erfindungsgemäßen Verfahrens zum Laden von Daten aus dem ersten Speicher 2.3 in die Frankiermaschine 3 geladen werden soll. Hierzu wird der PC 2 über die erste Schnittstelle 2.2 mittels einer Datenverbindung 4 mit der zweiten Schnittstelle 3.2 der Frankiermaschine 3 verbunden.

Die erste Verarbeitungseinheit 2.1 des PCs 2 greift zum Aufbereiten und Laden der ersten Daten in die Frankiermaschine 3 auf ein in dem ersten Speicher 2.3 abgelegtes erstes Programm zu, welches die nachfolgend beschriebenen Funktionen des PCs 2 bzw. seiner ersten Verarbeitungseinheit 2.1 zur Verfügung stellt. Die zweite Verarbeitungseinheit 3.1 der Frankiermaschine 3 greift zum Laden der ersten Daten auf ein in dem zweiten Speicher 3.3 abgelegtes zweites Programm (z. B. einen so genannten Bootloader) zu, welches die nachfolgend beschriebenen Funktionen der zweiten Verarbeitungseinheit 3.1 zur Verfügung stellt.

Im Folgenden wird unter Bezugnahme auf die Figuren 1 bis 3 eine bevorzugte Ausführungsform des erfindungsgemäßen Verfahrens zum Laden von Daten unter Verwendung einer bevorzugten Ausführungsform des erfindungsgemäßen Verfahrens zum Aufbereiten von Daten beschrieben, die mit der Anordnung aus Figur 1 durchgeführt wird.

Zunächst wird der Verfahrensablauf in einem Schritt 5.1 gestartet. In einem Schritt 5.2 überprüft die Verarbeitungseinheit 2.1, ob eine Anforderung zum Laden von ersten Daten in die Frankiermaschine 3 vorliegt.

Soll das Laden der ersten Daten erfolgen, bereitet die erste Verarbeitungseinheit 2.1 die ersten Daten in einem Aufbereitungsschritt 5.3 gemäß einer bevorzugten Ausführungsform des erfindungsgemäßen Verfahrens zum Aufbereiten von Daten zum Laden auf.

Dabei werden von der ersten Verarbeitungseinheit 2.1 zunächst in einem Ermittlungsschritt 5.4 mehrere erste Ladeparameter ermittelt, welche die Gesamtladezeit bis zum vollständigen Laden der ersten Daten in die Frankiermaschine 3 beeinflussen. Zu diesen ersten Ladeparametern gehören:

- die maximale Speicherkapazität m des zweiten Speichers 3.3, welche der zweiten Verarbeitungseinheit für die Verarbeitung der von dem PC 2 übermittelten Daten zur Verfügung steht;

- ein erster Verarbeitungsgeschwindigkeitswert v, der für die Verarbeitungsgeschwindigkeit der zweiten Verarbeitungseinheit 3.1 bei der Verarbeitung unkomprimierter Datenpakete repräsentativ ist;

- ein zweiter Verarbeitungsgeschwindigkeitswert *v'*, der für die Verarbeitungsgeschwindigkeit der zweiten Verarbeitungseinheit 3.1 bei der Verarbeitung komprimierter Datenpakete repräsentativ ist;

- ein erster Übertragungsgeschwindigkeitswert *u*, der für die Übertragungsgeschwindigkeit der Datenverbindung 4 bei der Übertragung unkomprimierter Datenpakete zwischen dem PC 2 und der Frankiermaschine 3 repräsentativ ist;

- ein zweiter Übertragungsgeschwindigkeitswert *u*, der für die Übertragungsgeschwindigkeit der Datenverbindung 4 bei der Übertragung komprimierter Datenpakete zwischen dem PC 2 und der Frankiermaschine 3 repräsentativ ist;

- ein für den Typ der ersten Daten repräsentativer Datentypwert.

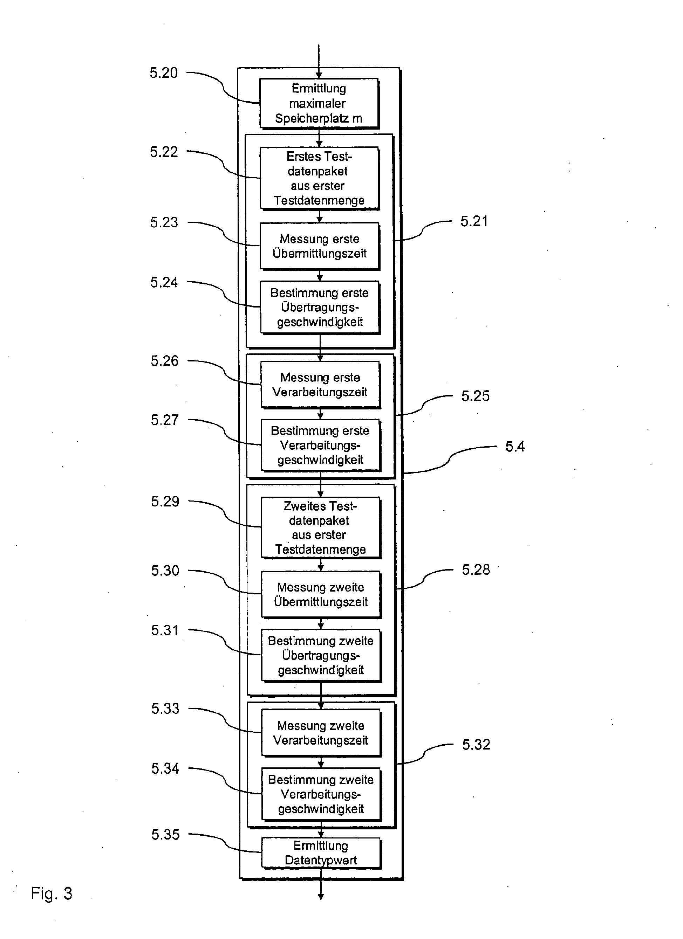

Die Ermittlung dieser ersten Ladeparameter erfolgt weit gehend auf experimentellem Wege und wird nachfolgend unter Bezugnahme auf die Figur 3 noch näher erläutert werden.

Es versteht sich in diesem Zusammenhang, dass die ersten Ladeparameter bei anderen Varianten der Erfindung auch derart erfolgen kann, dass zumindest ein Teil der entsprechenden ersten Ladeparameter in dem ersten Speicher 2.3 des PC gespeichert ist und anhand einer Identifikation der Frankiermaschine 3 identifiziert und geladen wird. Zusätzlich oder alternativ kann zumindest ein Teil der entsprechenden ersten Ladeparameter in dem zweiten Speicher 3.3 der Frankiermaschine 3 gespeichert sein und automatisch oder auf Anfrage des PCs 2 an diesen übermittelt werden. Die ersten Ladeparameter können dabei vorab experimentell ermittelt oder anhand technischer Daten der Datenverbindung 4 und der Frankiermaschine 3 ermittelt worden sein.

In einem Paketierungsschritt 5.5 erfolgt dann eine Aufteilung der ersten Daten in eine Mehrzahl von Datenpaketen, welche nachfolgend an die Frankiermaschine 3 übermittelt und von dieser verarbeitet werden.

In einem Schritt 5.6 wird durch die erste Verarbeitungseinheit 2.1 zunächst eine erste Datenteilmenge der ersten Daten gebildet und aus dieser ersten Datenteilmenge wiederum ein erstes Datenpaket der Größe *n* gebildet. In einem Schritt 5.7 wird durch die erste Verarbeitungseinheit 2.1 aus der ersten Datenteilmenge durch Datenkompression weiterhin ein zweites Datenpaket der Größe *n'* gebildet.

Die Bildung der ersten Datenteilmenge erfolgt dabei anhand eines vorgegebenen Schemas unter Berücksichtigung des Datentypwerts, der Aufschluss über die Kompressibilität der ersten Datenteilmenge und damit einen Anhaltspunkt hinsichtlich der Größe des zweiten Datenpakets liefert.

In einem Schritt 5.8 überprüft die erste Verarbeitungseinheit 2.1, ob die Summe S aus der Größe *n* des ersten Datenpakets und der Größe *n'* des zweiten Datenpakets kleiner oder gleich der maximal für die Verarbeitung von Datenpaketen zur Verfügung stehenden Speicherkapazität *m* der Frankiermaschine 3 ist. Ist dies nicht der Fall, reduziert die erste Verarbeitungseinheit 2.1 die erste Datenteilmenge in einem Schritt 5.9 und wiederholt die Schritte 5.6 bis 5.8.

Es versteht sich hierbei, dass bei anderen Varianten der Erfindung zusätzlich zur oder anstelle der Reduktion der ersten Datenteilmenge auch eine Erhöhung des Kompressionsgrades bei der Erzeugung des zweiten Datenpakets vorgenommen werden kann, um die Summe *S* entsprechend zu reduzieren.

Ist die Summe *S* kleiner oder gleich der Speicherkapazität *m* so erfolgt durch die erste Verarbeitungseinheit 2.1 in einem Schritt 5.10 zunächst eine Abschätzung der ersten Ladezeit *T(n)* des ersten Datenpakets in die Frankiermaschine 3, also der Zeit bis zum vollständigen Zurverfügungstellen der ersten Datenteilmenge in der Frankiermaschine 3 bei deren Übermittlung in Form des ersten Datenpakets. Diese erste Ladezeit *T(n)* bestimmt sich unter Verwendung eines Teils der ersten Ladeparameter in einer ersten Abschätzung nach folgender Gleichung:

$$T(n) = \frac{n}{u} + \frac{n}{v}, \qquad\qquad (1)$$

wobei: *n* : Größe des ersten Datenpakets;
*u* : erster Übertragungsgeschwindigkeitswert für unkomprimierte Daten;
*v* : erster Verarbeitungsgeschwindigkeitswert für unkomprimierte Daten.

Weiterhin erfolgt in dem Schritt 5.10 durch die erste Verarbeitungseinheit 2.1 eine Abschätzung der zweiten Ladezeit *T(n')* des zweiten Datenpakets in die Frankiermaschine 3, also der Zeit bis zum vollständigen Zurverfügungstellen der ersten Datenteilmenge in der Frankiermaschine 3 bei deren Übermittlung in Form des zweiten Datenpakets. Diese zweite Ladezeit *T(n')* bestimmt sich unter Verwendung eines Teils der ersten Ladeparameter in einer zweiten Abschätzung nach folgender Gleichung:

$$T(n') = \frac{n'}{u'} + \frac{n'}{v'}, \qquad\qquad (2)$$

wobei: $n'$ : Größe des zweiten Datenpakets;
$u'$ : zweiter Übertragungsgeschwindigkeitswert für komprimierte Daten;
$v'$ : zweiter Verarbeitungsgeschwindigkeitswert für komprimierte Daten.

In einem Schritt 5.11 werden die erste Ladezeit und die zweite Ladezeit verglichen. Ist die erste Ladezeit kleiner oder gleich der zweiten Ladezeit wählt die erste Verarbeitungseinheit 2.1 in einem Schritt 5.12 das erste Datenpaket als Versanddatenpaket für die Übermittlung an die Frankiermaschine 3 aus. Andernfalls wählt die erste Verarbeitungseinheit 2.1 in einem Schritt 5.13 das zweite Datenpaket als Versanddatenpaket für die Übermittlung an die Frankiermaschine 3 aus.

Hierdurch ist in einfacher Weise sichergestellt, dass stets dasjenige Datenpaket mit der kürzeren Ladezeit ausgewählt wird. Mit anderen Worten erfolgt dank des Verfahrens eine im Hinblick auf eine möglichst schnelle Verfügbarkeit der ersten Daten in der Frankiermaschine 3 optimierte Aufteilung der ersten Daten.

In einem Schritt 5.12 fügt die erste Verarbeitungseinheit 2.1 dem Versanddatenpaket eine Paketbeschreibung hinzu, anhand derer die Frankiermaschine 3 dann die Verarbeitung des Versanddatenpakets vornimmt. Die Paketbeschreibung umfasst dabei insbesondere eine Information, ob es sich bei dem Versanddatenpaket um ein komprimiertes oder unkomprimiertes Datenpaket handelt. Anhand dieser Information kann die Frankiermaschine 3 dann sofort feststellen, ob das Versanddatenpaket zunächst aufbereitet, also dekomprimiert werden muss, oder ob es sofort weiterverarbeitet werden kann.

In einem Schritt 5.15 überprüft die erste Verarbeitungseinheit 2.1, ob noch weitere Datenpakete erzeugt werden müssen, um die Aufteilung der ersten Daten in Versanddatenpakete abzuschließen. Ist dies der Fall, wird zurück zu Schritt 5.6 gesprungen und die Schritte 5.6 bis 5.14 für eine neue erste Datenteilmenge wiederholt. Folglich werden die ersten Daten in eine Reihe von Versanddatenpaketen unterteilt, die gegebenenfalls unterschiedlich groß sind.

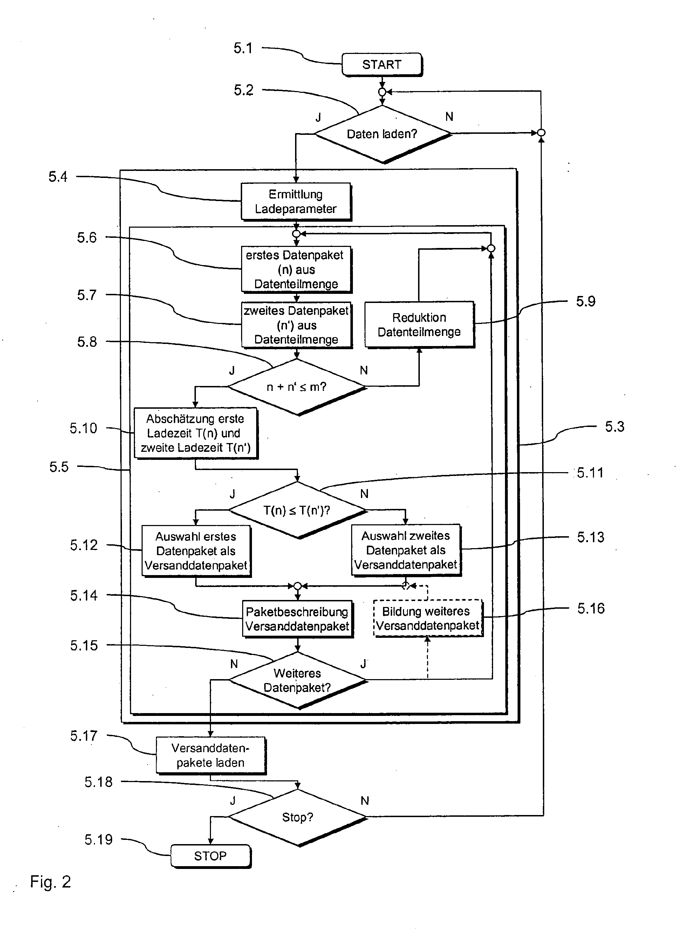

Es versteht sich in diesem Zusammenhang allerdings, dass bei anderen Varianten der Erfindung, insbesondere in Abhängigkeit von dem Datentyp der ersten Daten, bei Feststellen noch weiterer zu erzeugender Datenpakete in dem Schritt 5.15 auch vorgesehen sein kann, dass die weiteren Versanddatenpakete in einem in Figur 2 gestrichelt angedeuteten Schritt 5.16 dann entsprechend dem in Schritt 5.12 oder 5.13 ausgewählten Datenpaket generiert werden. Dies kann im Hinblick auf eine schnelle Paketierung insbesondere für Teile der ersten Daten sinnvoll sein, die durchgehend aus demselben Datentyp bestehen, sodass die Kompression einer beliebigen Datenteilmenge vorgegebener Größe aus diesen Daten stets ein zweites Datenpaket im Wesentlichen gleicher Größe ergibt.

Sind alle zu erzeugenden Versanddatenpakete generiert, werden diese in einem Ladeschritt 5.17 in die Frankiermaschine 3 geladen. Dabei sendet die erste Verarbeitungseinheit 2.1 zunächst das erste Versanddatenpaket an die zweite Verarbeitungseinheit 3.1. Die zweite Verarbeitungseinheit 3.1 liest dann die Paketbeschreibung aus. Bei vollständigem Empfang des ersten Versanddatenpakets, den die zweite Verarbeitungseinheit 3.1 anhand der Paketbeschreibung überprüft, wird dieser der ersten Verarbeitungseinheit 2.1 durch die zweite Verarbeitungseinheit 3.1 in Form einer Empfangsbestätigung bestätigt.

In Abhängigkeit von der Paketbeschreibung nimmt die zweite Verarbeitungseinheit 3.1 die Verarbeitung des Versanddatenpakets vor. Die Paketbeschreibung umfasst wie erwähnt, eine Information, ob es sich bei dem Versanddatenpaket um ein komprimiertes oder unkomprimiertes Datenpaket handelt. In Abhängigkeit von dieser Information wird das Versanddatenpaket gegebenenfalls zunächst dekomprimiert bevor es weiterverarbeitet wird.

Die vollständige Verarbeitung, also das vollständige Zuverfügungstellen, des Inhalts des Versanddatenpakets in der Frankiermaschine 3 wird der ersten Verarbeitungseinheit 2.1 durch die zweite Verarbeitungseinheit 3.1 in Form einer Verarbeitungsbestätigung ebenfalls bestätigt. Die erste Verarbeitungseinheit 2.1 fährt nach der Empfangsbestätigung und der Verarbeitungsbestätigung mit dem Senden des nächsten Versanddatenpakets fort. Dies geschieht solange, bis alle Versanddatenpakete übertragen wurden oder das Laden aufgrund eines Fehlers abgebrochen wurde.

Es versteht sich hierbei allerdings, dass bei anderen Varianten der Erfindung auch vorgesehen sein kann, dass jedes Versanddatenpaket unmittelbar nach seiner Fertigstellung in dem Schritt 5.14 versandt wird. Mit anderen Worten kann also auch vorgesehen sein, dass der Schritt 5.17 für das jeweilige Versanddatenpaket zwischen dem Schritt 5.14 und dem Schritt 5.15 durchgeführt wird.

Ist das Laden abgeschlossen, wird in einem Schritt 5.18 schließlich überprüft, ob der Verfahrensablauf beendet werden soll. Ist dies der Fall, endet der Verfahrensablauf in einem Schritt 5.19. Andernfalls wird zu dem Schritt 5.2 zurück gesprungen.

Unter Bezugnahme auf die Figuren 2 und 3 wird im Folgenden die Ermittlung der ersten Ladeparameter in den Schritt 5.4 erläutert.

Zunächst erfolgt in einem Schritt 5.20 die Ermittlung der maximalen Speicherkapazität m des zweiten Speichers 3.3, welche der zweiten Verarbeitungseinheit für die Verarbeitung der von dem PC 2 übermittelten Daten zur Verfügung steht. Diese wird durch die erste Verarbeitungseinheit 2.1 von der zweiten Verarbeitungseinheit 3.1 abgefragt.

In einem ersten Testschritt 5.21 erzeugt die erste Verarbeitungseinheit 2.1 zunächst in einem Schritt 5.22 nach einem vorgegebenen Schema aus einer ersten Testdatenmenge ein erstes Testdatenpaket der Größe $t$. In einem Schritt 5.23 des ersten Testschritts 5.21 übermittelt die erste Verarbeitungseinheit 2.1 das erste Testdatenpaket an die zweite Verarbeitungseinheit 3.1 und misst unter Verwendung einer Empfangsbestätigung der zweiten Verarbeitungseinheit 3.1 die erste Übermittlungszeit $T_u$ des ersten Testdatenpakets. In einem Schritt 5.24 des ersten Testschritts 5.21 ermittelt die erste Verarbeitungseinheit 2.1 aus der ersten Übermittlungszeit $T_u$ und der ersten Testdatenpaketgröße $t$ den ersten Übertragungsgeschwindigkeitswert u nach der Gleichung:

$$u = \frac{t}{T_u} . \qquad\qquad (3)$$

In einem zweiten Testschritt 5.25 verarbeitet die zweite Verarbeitungseinheit 3.1 zunächst in einem Schritt 5.26 das erstes Testdatenpaket und misst dabei die erste Verarbeitungszeit $T_v$ des ersten Testdatenpakets bis zum vollständigen Zurverfügungstehen der ersten Testdatenmenge in der Frankiermaschine 3. In einem Schritt 5.27 des zweiten Testschritts 5.25 übermittelt die zweite Verarbeitungseinheit 3.1 die Verarbeitungszeit $T_v$ an die erste Verarbeitungseinheit 2.1. Diese ermittelt dann aus der ersten Verarbeitungszeit $T_v$ und der ersten Testdatenpaketgröße $t$ den ersten Verarbeitungsgeschwindigkeitswert v nach der Gleichung:

$$v = \frac{t}{T_v} . \qquad\qquad (4)$$

In einem dritten Testschritt 5.28 erzeugt die erste Verarbeitungseinheit 2.1 zunächst in einem Schritt 5.29 nach einem vorgegebenen Schema unter Kompression der ersten Testdatenmenge ein zweites Testdatenpaket der Größe $t'$. In einem Schritt 5.30 des dritten Testschritts 5.28 übermittelt die erste Verarbeitungseinheit 2.1 das zweite Testdatenpaket an die zweite Verarbeitungseinheit 3.1 und misst unter Verwendung einer Empfangsbestätigung der zweiten Verarbeitungseinheit 3.1 die zweite Übermittlungszeit $T'_u$ des zweiten Testdatenpakets. In einem Schritt 5.31 des dritten Testschritts 5.28 ermittelt die erste Verarbeitungseinheit 2.1 aus der zweiten Übermittlungszeit $T'_u$ und der zweiten Testdatenpaketgröße $t'$ den zweiten Übertragungsgeschwindigkeitswert u' nach der Gleichung:

$$u' = \frac{t'}{T'_u} . \qquad\qquad (5)$$

In einem vierten Testschritt 5.32 verarbeitet die zweite Verarbeitungseinheit 3.1 zunächst in einem Schritt 5.33 das zweite Testdatenpaket und misst dabei die zweite Verarbeitungszeit $T'_v$ des zweiten Testdatenpakets bis zum vollständigen Zurverfügungstehen der ersten Testdatenmenge in der Frankiermaschine 3. In einem Schritt 5.34 des zweiten Testschritts 5.32 übermittelt die zweite Verarbeitungseinheit 3.1 die zweite Verarbeitungszeit $T'_v$ an die erste Verarbeitungseinheit 2.1. Diese ermittelt dann aus der zweiten Verarbeitungszeit $T'_v$ und der zweiten Testdatenpaketgröße $t'$ den zweiten Verarbeitungsgeschwindigkeitswert v' nach der Gleichung:

$$v' = \frac{t'}{T'_v} . \qquad\qquad (6)$$

In einem Schritt 5.35 als letztem Teilschritt des Ermittlungsschritts 5.4 ermittelt die erste Verarbeitungseinheit 2.1 schließlich dann noch aus den ersten Daten den Datentypwert.

Im Folgenden wird unter Bezugnahme auf die Figuren 1, 4 und 5 eine weitere bevorzugte Ausführungsform des erfindungsgemäßen Verfahrens zum Laden von Daten unter Verwendung einer bevorzugten Ausführungsform des erfindungsgemäßen Verfahrens zum Aufbereiten von Daten beschrieben, die mit der Anordnung 1 aus Figur 1 durchgeführt werden kann.

In dem vorliegenden Beispiel werden erste Daten von einem entfernten Datenzentrum 6 über ein Kommunikationsnetz 7 an die Frankiermaschine 3 übertragen. Das Datenzentrum 6 umfasst dabei eine erste Verarbeitungseinheit 6.1, die mit einer ersten Kommunikationseinheit 6.2 und einem ersten Speicher 6.3 verbunden ist. Zum Laden der ersten Daten von dem Datenzentrum 6 in die Frankiermaschine 3 wird über die ersten Kommunikationseinheit 6.2, das Kommunikationsnetz 7 und die zweite Kommunikationseinheit 3.4 der Frankiermaschine 3 eine Datenverbindung zwischen dem Datenzentrum 6 und der Frankiermaschine 3 hergestellt.

Zunächst wird der Verfahrensablauf in einem Schritt 105.1 gestartet. In einem Schritt 105.2 überprüft die Verarbeitungseinheit 6.1, ob eine Anforderung zum Laden von ersten Daten in die Frankiermaschine 3 vorliegt.

Soll das Laden der ersten Daten erfolgen, bereitet die erste Verarbeitungseinheit 6.1 die ersten Daten in einem Aufbereitungsschritt 105.3 gemäß einer bevorzugten Ausführungsform des erfindungsgemäßen Verfahrens zum Aufbereiten von Daten zum Laden auf.

Dabei werden von der ersten Verarbeitungseinheit 6.1 zunächst in einem Ermittlungsschritt 105.4 mehrere erste Ladeparameter ermittelt, welche die Gesamtladezeit bis zum vollständigen Laden der ersten Daten in die Frankiermaschine 3 beeinflussen. Zu diesen ersten Ladeparametern gehören wiederum:

- die maximale Speicherkapazität m des zweiten Speichers 3.3, welche der zweiten Verarbeitungseinheit für die Verarbeitung der von dem Datenzentrum 6 übermittelten Daten zur Verfügung steht;

- ein erster Verarbeitungsgeschwindigkeitswert $v$, der für die Verarbeitungsgeschwindigkeit der zweiten Verarbeitungseinheit 3.1 bei der Verarbeitung unkomprimierter Datenpakete repräsentativ ist;

- ein zweiter Verarbeitungsgeschwindigkeitswert $v'$, der für die Verarbeitungsgeschwindigkeit der zweiten Verarbeitungseinheit 3.1 bei der Verarbeitung komprimierter Datenpakete repräsentativ ist;

- ein erster Übertragungsgeschwindigkeitswert $u$, der für die Übertragungsgeschwindigkeit der Datenverbindung 7 bei der Übertragung unkomprimierter Datenpakete zwischen dem Datenzentrum 6 und der Frankiermaschine 3 repräsentativ ist;

- ein zweiter Übertragungsgeschwindigkeitswert $u$, der für die Übertragungsgeschwindigkeit der Datenverbindung 7 bei der Übertragung komprimierter Datenpakete zwischen dem Datenzentrum 6 und der Frankiermaschine 3 repräsentativ ist;

- ein für den Typ der ersten Daten repräsentativer Datentypwert.

Die Ermittlung dieser ersten Ladeparameter in dem Ermittlungsschritt 105.3 erfolgt weit gehend auf experimentellem Wege, wie dies oben im Zusammenhang mit Figur 3 beschrieben wurde, sodass diesbezüglich auf die obigen Ausführungen verwiesen wird.

Es versteht sich in diesem Zusammenhang wiederum, dass die ersten Ladeparameter bei anderen Varianten der Erfindung auch derart erfolgen kann, dass zumindest ein Teil der entsprechenden ersten Ladeparameter in dem ersten Speicher 6.3 des Datenzentrums gespeichert ist und anhand einer Identifikation der Frankiermaschine 3 identifiziert und geladen wird. In dem ersten Speicher 6.3 des Datenzentrums 6 sind dabei für alle $k$ Frankiermaschinen 3, 8 entsprechende erste Ladeparameter gespeichert.

Zusätzlich oder alternativ kann zumindest ein Teil der entsprechenden ersten Ladeparameter in dem zweiten Speicher 3.3 der Frankiermaschine 3 gespeichert sein und automatisch oder auf Anfrage des Datenzentrums 6 an diesen übermittelt werden. Die ersten Ladeparameter können dabei vorab experimentell ermittelt oder anhand technischer Daten der Datenverbindung 7 und der Frankiermaschine 3 ermittelt worden sein.

In einem Paketierungsschritt 105.5 erfolgt dann eine Aufteilung der ersten Daten in eine Mehrzahl von Datenpaketen, welche nachfolgend an die Frankiermaschine 3 übermittelt und von dieser verarbeitet werden.

In einem Schritt 105.6 wird durch die erste Verarbeitungseinheit 6.1 zunächst eine erste Datenteilmenge der ersten Daten gebildet und aus dieser ersten Datenteilmenge wiederum ein erstes Datenpaket der Größe $n$ gebildet. In einem Schritt 105.7 wird durch die erste Verarbeitungseinheit 6.1 aus der ersten Datenteilmenge durch Datenkompression weiterhin ein zweites Datenpaket der Größe $n'$ gebildet.

Die Bildung der ersten Datenteilmenge erfolgt dabei anhand eines vorgegebenen Schemas unter Berücksichtigung des Datentypwerts, der Aufschluss über die Kompressibilität der ersten Datenteilmenge und damit einen Anhaltspunkt hinsichtlich der Größe des zweiten Datenpakets liefert.

In einem Schritt 105.8 überprüft die erste Verarbeitungseinheit 6.1, ob die Summe S aus der Größe $n$ des ersten Datenpakets und der Größe $n'$ des zweiten Datenpakets kleiner oder gleich der maximal für die Verarbeitung von Datenpaketen zur Verfügung stehenden Speicherkapazität $m$ der Frankiermaschine 3 ist. Ist dies nicht der Fall, reduziert die erste Verarbeitungseinheit 6.1 die erste Datenteilmenge in einem Schritt 105.9 und wiederholt die Schritte 105.6 bis 105.8.

Es versteht sich hierbei, dass bei anderen Varianten der Erfindung zusätzlich zur oder anstelle der Reduktion der ersten Datenteilmenge auch eine Erhöhung des Kompressionsgrades bei der Erzeugung des zweiten Datenpakets vorgenommen werden kann, um die Summe S entsprechend zu reduzieren.

Ist die Summe S kleiner oder gleich der Speicherkapazität m so erfolgt durch die erste Verarbeitungseinheit 6.1 in einem Schritt 105.10 zunächst, wie nachfolgend noch detaillierter erläutert wird, eine Abschätzung der ersten Gesamtladezeit $T_g(n)$ der ersten Daten in die Frankiermaschine 3, also der Zeit bis zum vollständigen Zurverfügungstellen der ersten Daten in der Frankiermaschine 3 bei einer Aufteilung der ersten Daten in z erste Datenpakete der Größe der ersten Datenteilmenge.

Weiterhin erfolgt in dem Schritt 105.10 durch die erste Verarbeitungseinheit 6.1, wie nachfolgend ebenfalls noch detaillierter erläutert wird, eine Abschätzung der zweiten Ladezeit $T_g(n')$ des zweiten Datenpakets in die Frankiermaschine 3, also der Zeit bis zum vollständigen Zurverfügungstellen der ersten Daten in der Frankiermaschine 3 bei einer Aufteilung der ersten Daten in z zweite Datenpakete der Größe n'.

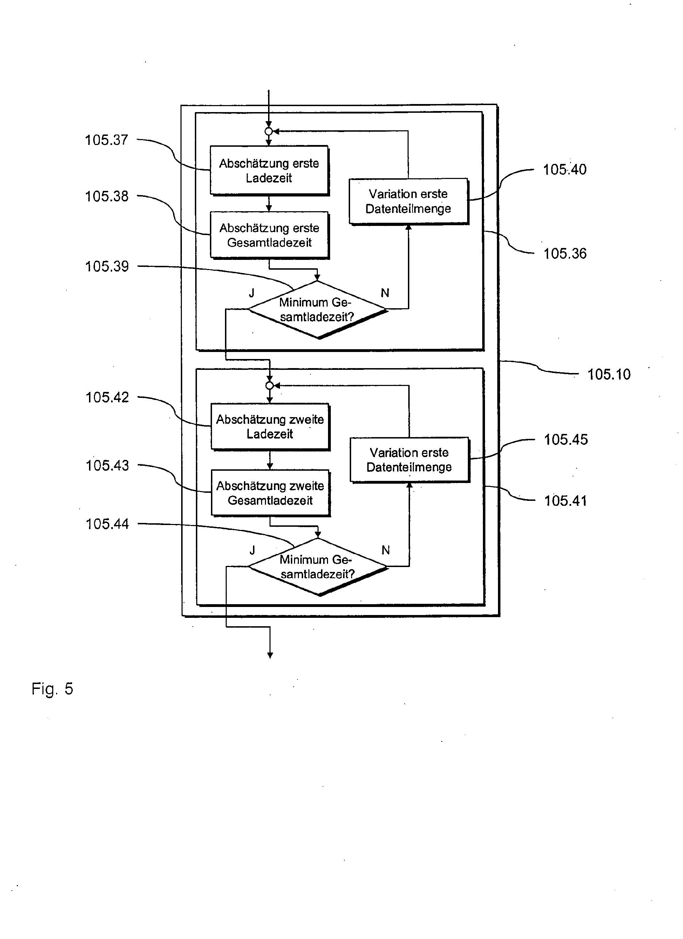

Die erste Gesamtladezeit $T_g(n)$ und die zweite Gesamtladezeit $T_g(n')$ werden in dem Schritt 105.10 noch optimiert, d. h. minimiert, wie nachfolgend unter Bezugnahme auf die Figur 5 ebenfalls noch näher erläutert wird.

In einem Schritt 105.11 werden die erste Gesamtladezeit und die zweite Gesamtladezeit verglichen. Ist die erste Gesamtladezeit kleiner oder gleich der zweiten Gesamtladezeit wählt die erste Verarbeitungseinheit 6.1 in einem Schritt 105.12 das erste Datenpaket als Versanddatenpaket für die Übermittlung an die Frankiermaschine 3 aus. Andernfalls wählt die erste Verarbeitungseinheit 6.1 in einem Schritt 105.13 das zweite Datenpaket als Versanddatenpaket für die Übermittlung an die Frankiermaschine 3 aus.

Hierdurch ist in einfacher Weise sichergestellt, dass stets dasjenige Datenpaket mit der kürzeren Gesamtladezeit ausgewählt wird. Mit anderen Worten erfolgt dank des Verfahrens eine im Hinblick auf eine möglichst schnelle Verfügbarkeit der ersten Daten in der Frankiermaschine 3 optimierte Aufteilung der ersten Daten.

In einem Schritt 105.12 fügt die erste Verarbeitungseinheit 6.1 dem Versanddatenpaket eine Paketbeschreibung hinzu, anhand derer die Frankiermaschine 3 dann die Verarbeitung des Versanddatenpakets vornimmt. Die Paketbeschreibung umfasst dabei insbesondere eine Information, ob es sich bei dem Versanddatenpaket um ein komprimiertes oder unkomprimiertes Datenpaket handelt. Anhand dieser Information kann die Frankiermaschine 3 dann sofort feststellen, ob das Versanddatenpaket zunächst aufbereitet, also dekomprimiert werden muss, oder ob es sofort weiterverarbeitet werden kann.

In einem Schritt 105.15 überprüft die erste Verarbeitungseinheit 6.1, ob noch weitere Datenpakete erzeugt werden müssen, um die Aufteilung der ersten Daten in Versanddatenpakete abzuschließen.

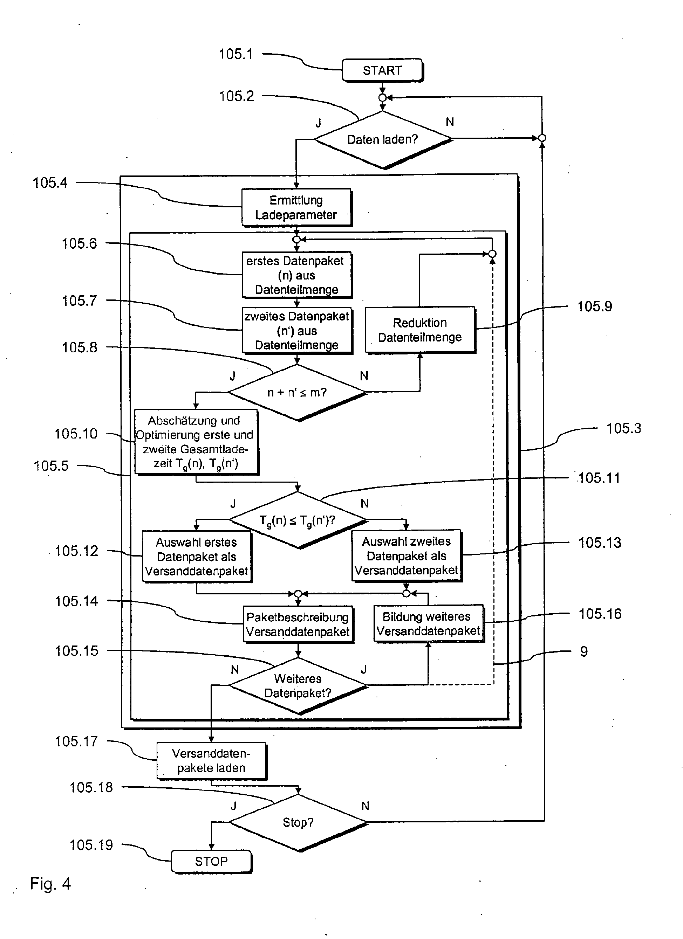

Ist dies der Fall, werden die weiteren Versanddatenpakete einem Schritt 105.16 dann entsprechend dem in Schritt 105.12 oder 105.13 ausgewählten Datenpaket generiert. Es versteht sich in diesem Zusammenhang allerdings, dass bei anderen Varianten der Erfindung auch vorgesehen sein kann, dass zur Generierung weiterer Versanddatenpakete zurück zu Schritt 105.6 gesprungen wird, wie dies in Figur 4 durch die gestrichelte Verbindung 9 angedeutet ist.

Sind alle zu erzeugenden Versanddatenpakete generiert, werden diese in einem Ladeschritt 105.17 in die Frankiermaschine 3 geladen. Dabei sendet die erste Verarbeitungseinheit 6.1 zunächst das erste Versanddatenpaket an die zweite Verarbeitungseinheit 3.1. Die zweite Verarbeitungseinheit 3.1 liest dann die Paketbeschreibung aus. Bei vollständigem Empfang des ersten Versanddatenpakets, den die zweite Verarbeitungseinheit 3.1 anhand der Paketbeschreibung überprüft, wird dieser der ersten Verarbeitungseinheit 6.1 durch die zweite Verarbeitungseinheit 3.1 in Form einer Empfangsbestätigung bestätigt.

In Abhängigkeit von der Paketbeschreibung nimmt die zweite Verarbeitungseinheit 3.1 die Verarbeitung des Versanddatenpakets vor. Die Paketbeschreibung umfasst wie erwähnt, eine Information, ob es sich bei dem Versanddatenpaket um ein komprimiertes oder unkomprimiertes Datenpaket handelt. In Abhängigkeit von dieser Information wird das Versanddatenpaket gegebenenfalls zunächst dekomprimiert bevor es weiterverarbeitet wird.

Die vollständige Verarbeitung, also das vollständige Zurverfügungstellen, des Inhalts des Versanddatenpakets in der Frankiermaschine 3 wird der ersten Verarbeitungseinheit 6.1 durch die zweite Verarbeitungseinheit 3.1 in Form einer Verarbeitungsbestätigung ebenfalls bestätigt. Die erste Verarbeitungseinheit 6.1 fährt nach der Empfangsbestätigung und der Verarbeitungsbestätigung mit dem Senden des nächsten Versanddatenpakets fort. Dies geschieht solange, bis alle Versanddatenpakete übertragen wurden oder das Laden aufgrund eines Fehlers abgebrochen wurde.

Es versteht sich hierbei allerdings, dass bei anderen Varianten der Erfindung auch vorgesehen sein kann, dass jedes Versanddatenpaket unmittelbar nach seiner Fertigstellung in dem Schritt 105.14 versandt wird. Mit anderen Worten kann also auch vorgesehen sein, dass der Schritt 105.17 für das jeweilige Versanddatenpaket zwischen dem Schritt 105.14 und dem Schritt 105.15 durchgeführt wird.

Ist das Laden abgeschlossen, wird in einem Schritt 105.18 schließlich überprüft, ob der Verfahrensablauf beendet werden soll. Ist dies der Fall, endet der Verfahrensablauf in einem Schritt 105.19. Andernfalls wird zu dem Schritt 105.2 zurück gesprungen.

Unter Bezugnahme auf die Figuren 4 und 5 wird im Folgenden die Abschätzung und Optimierung der Gesamtladezeiten in den Schritt 105.4 erläutert.

Zunächst erfolgt in einem ersten Optimierungsschritt 105.36 eine Abschätzung und Optimierung der ersten Gesamtladezeit. Dabei wird in einem Schritt 105.37 mit der Größe n des ersten Datenpakets, dem ersten Übertragungsgeschwindigkeitswert u für unkomprimierte Daten und dem ersten Verarbeitungsgeschwindigkeitswert $v$ für unkomprimierte Daten zunächst die erste Ladezeit $T(n)$ des ersten Datenpakets in einer ersten Abschätzung nach der Gleichung (1) bestimmt.

Anschließend wird in einem Schritt 105.38 mit der ersten Ladezeit $T(n)$ für die z ersten Datenpakete die erste Gesamtladezeit $T_g(n)$ in einer dritten Abschätzung nach folgender Gleichung abgeschätzt:

$$T_g(n) = z \cdot T(n). \qquad\qquad (7)$$

Wie bereits erwähnt, ist die erste Gesamtladezeit die Zeit, die bis zum vollständigen Zurverfügungstellen der ersten Daten in der Frankiermaschine 3 bei einer Aufteilung der ersten Daten in erste Datenpakete der Größe der ersten Datenteilmenge verstreicht.

In einem Schritt 105.39 erfolgt dann eine Überprüfung, ob die erste Gesamtladezeit ein Minimum eingenommen hat. Ist dies nicht der Fall, wird in einem Schritt 105.40 die Größe der ersten Datenteilmenge variiert und dann die Schritte 105.37 bis 105.39 wiederholt.

Bei dem wiederholten Durchlaufen des Schrittes 105.39 wird die ermittelte neue erste Gesamtladezeit in einem ersten Gesamtladezeitvergleich mit der ermittelten vorherigen ersten Gesamtladezeit verglichen. Ist die neue erste Gesamtladezeit kleiner als die vorherige erste Gesamtladezeit, besteht folglich die Möglichkeit einer weiteren Reduzierung. In dem nachfolgenden Schritt 105.40 wird dann eine weitere Variation der ersten Datenteilmenge in der gleichen Richtung vorgenommen und dann die Schritte 105.37 bis 105.39 erneut wiederholt.

Dies geschieht so lange, bis in einem wiederholten Schritt 105.39 ein Ansteigen der Gesamtladezeit registriert wird oder ein vorgegebener unterer Grenzwert der ersten Gesamtladezeit erreicht wird. Das erneute Ansteigen der ersten Gesamtladezeit ist dabei ein Indiz, dass sich die erste Gesamtladezeit mit einer gewissen Toleranz an ein Minimum der ersten Gesamtladezeit angenähert hat. Je nach der Größe der aktuellen Variation der ersten Gesamtladezeit und der vorgegebenen Toleranz kann an dieser Stelle die Optimierung abgebrochen oder mit kleineren Variationsschritten fortgesetzt werden.

In einem zweiten Optimierungsschritt 105.41 erfolgt dann eine Abschätzung und Optimierung der zweiten Gesamtladezeit. Dabei wird in einem Schritt 105.42 mit der Größe n'des komprimierten zweiten Datenpakets, dem zweiten Übertragungsgeschwindigkeitswert $u'$ für komprimierte Daten und dem zweiten Verarbeitungsgeschwindigkeitswert $v'$ für komprimierte Daten zunächst die zweite Ladezeit $T(n')$ des ersten Datenpakets in einer zweiten Abschätzung nach der Gleichung (2) bestimmt.

Anschließend wird in einem Schritt 105.43 mit der zweiten Ladezeit $T(n')$ für die $z'$ zweiten Datenpakete die erste Gesamtladezeit $T_g(n')$ in einer vierten Abschätzung nach folgender Gleichung abgeschätzt:

$$T_g(n') = z' \cdot T(n'). \qquad\qquad (8)$$

Wie bereits erwähnt, ist die zweite Gesamtladezeit die Zeit, die bis zum vollständigen Zurverfügungstellen der ersten Daten in der Frankiermaschine 3 bei einer Aufteilung der ersten Daten in komprimierte zweite Datenpakete verstreicht, deren Größe der komprimierten ersten Datenteilmenge entspricht.

In einem Schritt 105.44 erfolgt dann eine Überprüfung, ob die zweite Gesamtladezeit ein Minimum eingenommen hat. Ist dies nicht der Fall, werden in einem Schritt 105.45 die Größe der ersten Datenteilmenge variiert und dann die Schritte 105.42 bis 105.44 wiederholt.

Bei dem wiederholten Durchlaufen des Schrittes 105.44 wird die ermittelte neue zweite Gesamtladezeit in einem zweiten Gesamtladezeitvergleich mit der ermittelten vorherigen zweiten Gesamtladezeit verglichen. Ist die neue zweite Gesamtladezeit kleiner als die vorherige zweite Gesamtladezeit, besteht folglich die Möglichkeit einer weiteren Reduzierung. In dem nachfolgenden Schritt 105.45 wird dann eine weitere Variation der ersten Datenteilmenge in der gleichen Richtung vorgenommen und dann die Schritte 105.42 bis 105.44 erneut wiederholt.

Dies geschieht so lange, bis in einem wiederholten Schritt 105.44 ein Ansteigen der Gesamtladezeit registriert wird oder ein vorgegebener unterer Grenzwert der zweiten Gesamtladezeit erreicht wird. Das erneute Ansteigen der zweiten Gesamtladezeit ist dabei wiederum ein Indiz, dass sich die zweite Gesamtladezeit mit einer gewissen Toleranz an ein Minimum der zweiten Gesamtladezeit angenähert hat. Je nach der Größe der aktuellen Variation der zweiten Gesamtladezeit und der vorgegebenen Toleranz kann an dieser Stelle die Optimierung abgebrochen oder mit kleineren Variationsschritten fortgesetzt werden.

Die vorliegende Erfindung wurde vorstehend ausschließlich anhand von Beispielen beschrieben, bei denen die Generierung der Versanddatenpakete anhand des Vergleichs von Ladezeiten auf unterschiedliche Weise generierter Datenpakete erfolgt. Es versteht sich jedoch, dass bei anderen Varianten der Erfindung alternativ oder zusätzlich zu einem solchen Vergleich auch vorgesehen sein kann, dass für einen oder mehrere der ermittelten Ladeparameter Grenzwerte vorgesehen sind, deren Über- bzw. Unterschreitung ein bestimmtes Vorgehen bei der Generierung der Versanddatenpakete bedingt. So könnte beispielsweise ein Grenzwert für die Verarbeitungsgeschwindigkeit der zweiten Datenverarbeitungseinrichtung vorgesehen sein, bei dessen Überschreitung stets komprimierte Versanddatenpakete verwendet werden.

Weiterhin wurde die vorliegende Erfindung vorstehend ausschließlich anhand von Beispielen mit einer Frankiermaschine beschrieben. Es versteht sich jedoch, dass sich die Erfindung auch für beliebige andere Anwendungen einsetzen lässt, bei denen Daten von einer ersten Datenverarbeitungseinrichtung in eine zweite Datenverarbeitungseinrichtung geladen werden sollen.

**Patentansprüche**

1. Verfahren zum Aufbereiten von Daten für das Laden von einer ersten Datenverarbeitungseinrichtung (2, 6) über eine erste Datenverbindung (4, 7) in eine zweite Datenverarbeitungseinrichtung (3), bei dem

- in wenigstens einem Paketierungsschritt (5.5; 105.5) aus den in die zweite Datenverarbeitungseinrichtung (3) zu ladenden ersten Daten eine Mehrzahl von versandfertigen Versanddatenpaketen erzeugt werden, wobei
- in einem dem Paketierungsschritt (5.5; 105.5) vorangehenden Ermittlungsschritt (5.4; 105.4) wenigstens ein die Gesamtladezeit bis zum vollständigen Laden der ersten Daten in die zweite Datenverarbeitungseinrichtung (2) beeinflussender erster Ladeparameter ermittelt wird und
- die Erzeugung der Versanddatenpakete in dem wenigstens einen Paketierungsschritt (5.5; 105.5) in Abhängigkeit von dem ersten Ladeparameter erfolgt,

**dadurch gekennzeichnet, dass**

- als der erste Ladeparameter ein Ladeparameter der zweiten Datenverarbeitungseinrichtung (3) ermittelt wird.

2. Verfahren nach Anspruch 1, **dadurch gekennzeichnet, dass** in dem Ermittlungsschritt (5.4; 105.4)

- als erster Ladeparameter eine in der zweiten Datenverarbeitungseinrichtung (3) für die Verarbeitung der Versanddatenpakete maximal zur Verfügung stehende Speicherkapazität ermittelt wird und/oder
- als erster Ladeparameter ein für die Verarbeitungsgeschwindigkeit der Versanddatenpakete in der zweiten Datenverarbeitungseinrichtung (3) repräsentativer Verarbeitungsgeschwindigkeitswert ermittelt wird und/oder
- als weiterer Ladeparameter ein für die Übertragungsgeschwindigkeit zwischen der ersten und zweiten Datenverarbeitungseinrichtung (2, 6, 3) repräsentativer Übertragungsgeschwindigkeitswert ermittelt wird und/oder
- als weiterer Ladeparameter ein für den Typ der ersten Daten repräsentativer Datentypwert ermittelt wird.

3. Verfahren nach Anspruch 1 oder 2, **dadurch gekennzeichnet, dass** der wenigstens eine erste Ladeparameter in Abhängigkeit von der zweiten Datenverarbeitungseinrichtung (3) aus einem ersten Speicher (2.3) der ersten Datenverarbeitungseinrichtung (2) ausgelesen wird und/oder ein weiterer Ladeparameter in Abhängigkeit von der ersten Datenverbindung (4, 7) aus einem ersten Speicher (2.3) der ersten Datenverarbeitungseinrichtung (2) ausgelesen wird.

4. Verfahren nach Anspruch 1 oder 2, **dadurch gekennzeichnet, dass** in dem Ermittlungsschritt (5.4; 105.4) in einem ersten Testschritt (5.21) aus einer ersten Testdatenmenge wenigstens ein erstes Testdatenpaket gebildet und zur Ermittlung des wenigstens einen Ladeparameters an die zweite Datenverarbeitungseinrichtung (3) übermittelt wird.

5. Verfahren nach Anspruch 4, **dadurch gekennzeichnet, dass** in dem ersten Testschritt (5.21)

- die erste Übermittlungszeit bis zum vollständigen Übermitteln des ersten Testdatenpakets an die zweite Datenverarbeitungseinrichtung (3) ermittelt wird und
- aus der ersten Übermittlungszeit als erster Ladeparameter ein für die Übertragungsgeschwindigkeit des ersten Testdatenpakets zwischen der ersten und zweiten Datenverarbeitungseinrichtung (2, 6, 3) repräsentativer erster Übertragungsgeschwindigkeitswert ermittelt wird.

6. Verfahren nach Anspruch 4 oder 5, **dadurch gekennzeichnet, dass**

- in einem zweiten Testschritt (5.25) die erste Verarbeitungszeit bis zum vollständigen Zurverfügungstellen des empfangenen ersten Testdatenpakets in der zweiten Datenverarbeitungseinrichtung (3) ermittelt wird und
- aus der ersten Verarbeitungszeit als erster Ladeparameter ein für die Verarbeitungsgeschwindigkeit von ersten Datenpaketen in der zweiten Datenverarbeitungseinrichtung (3) repräsentativer erster Verarbeitungsgeschwindigkeitswert ermittelt wird.

7. Verfahren nach einem der Ansprüche 4 bis 6, **dadurch gekennzeichnet, dass** in dem Ermittlungsschritt (5.4; 105.4) in einem dritten Testschritt (5.28) aus der ersten Testdatenmenge ein zweites Testdatenpaket gebildet und zur Ermittlung des wenigstens einen Ladeparameters an die zweite Datenverarbeitungseinrichtung (3) übermittelt wird.

8. Verfahren nach Anspruch 7, **dadurch gekennzeichnet, dass** in dem dritten Testschritt (5.28)

- die zweite Übermittlungszeit bis zum vollständigen Übermitteln des zweiten Testdatenpakets an die zweite Datenverarbeitungseinrichtung (3) ermittelt wird und
- aus der zweiten Übermittlungszeit als erster Ladeparameter ein für die Übertragungsgeschwindigkeit des zweiten Testdatenpakets zwischen der ersten und zweiten Datenverarbeitungseinrichtung (2, 6, 3) repräsentativer zweiter Übertragungsgeschwindigkeitswert ermittelt wird.

9. Verfahren nach Anspruch 7 oder 8, **dadurch gekennzeichnet, dass**

- in einem vierten Testschritt (5.32) die zweite Verarbeitungszeit bis zum vollständigen Zurverfügungstellen des empfangenen zweiten Testdatenpakets in der zweiten Datenverarbeitungseinrichtung (3) ermittelt wird und
- aus der zweiten Verarbeitungszeit als erster Ladeparameter ein für die Verarbeitungsgeschwindigkeit von zweiten Datenpaketen in der zweiten Datenverarbeitungseinrichtung (3) repräsentativer zweiter Verarbeitungsgeschwindigkeitswert ermittelt wird.

10. Verfahren nach einem der Ansprüche 7 bis 9, **dadurch gekennzeichnet, dass** das zweite Testdatenpaket in dem dritten Testschritt (5.28) unter Kompression der ersten Testdatenmenge erzeugt wird.

11. Verfahren nach einem der vorhergehenden Ansprüche, **dadurch gekennzeichnet, dass** in dem wenigstens einen Paketierungsschritt (5.5; 105.5)

- in einem ersten Teilschritt (5.6, 5.7, 5.8, 5.9; 105.6, 105.7, 105.8, 105.9) aus einer ersten Datenteilmenge der ersten Daten wenigstens ein erstes Datenpaket erzeugt wird,
- in einem zweiten Teilschritt (5.10; 105.10) unter Verwendung des wenigstens einen ersten Ladeparameters für das erste Datenpaket eine erste Abschätzung der ersten Ladezeit des ersten Datenpakets erfolgt.

12. Verfahren nach Anspruch 11, **dadurch gekennzeichnet, dass**

- in einem dritten Teilschritt (5.11; 105.11) die in dem zweiten Teilschritt (5.10; 105.10) ermittelte erste Ladezeit in einem Ladezeitvergleich mit einem Ladezeitvergleichswert verglichen wird und
- in einem vierten Teilschritt (5.12, 5.13; 105.12, 105.13) in Abhängigkeit von dem Ergebnis des Ladezeitvergleichs eine Auswahl des ersten Datenpakets als Versanddatenpaket erfolgt.

13. Verfahren nach Anspruch 12, **dadurch gekennzeichnet, dass**

- in dem ersten Teilschritt (5.6, 5.7, 5.8, 5.9; 105.6, 105.7, 105.8, 105.9) aus der ersten Datenteilmenge ein zweites Datenpaket erzeugt wird
- in dem zweiten Teilschritt (5.10; 105.10) unter Verwendung des wenigstens einen ersten Ladeparameters für das zweite Datenpaket eine zweite Abschätzung der zweiten Ladezeit des zweiten Datenpakets erfolgt.

14. Verfahren nach Anspruch 13, **dadurch gekennzeichnet, dass**

- in dem dritten Teilschritt (5.11; 105.11) die in dem zweiten Teilschritt (5.10; 105.10) ermittelte zweite Ladezeit als Ladezeitvergleichswert verwendet wird und
- in dem vierten Teilschritt (5.12, 5.13; 105.12, 105.13) in Abhängigkeit von dem Ergebnis des Ladezeitvergleichs eine Auswahl des ersten Datenpakets oder des zweiten Datenpakets als Versanddatenpaket erfolgt.

15. Verfahren nach Anspruch 14, **dadurch gekennzeichnet, dass** in dem vierten Teilschritt (5.12, 5.13; 105.12, 105.13) dasjenige Datenpaket mit der kleineren Ladezeit als Versanddatenpaket ausgewählt wird.

16. Verfahren nach einem der Ansprüche 13 bis 15, **dadurch gekennzeichnet, dass** das zweite Datenpaket in dem ersten Teilschritt (5.6, 5.7, 5.8, 5.9; 105.6, 105.7, 105.8, 105.9) unter Kompression der ersten Datenteilmenge erzeugt wird.

17. Verfahren nach Anspruch 16, **dadurch gekennzeichnet, dass**

   - in dem Ermittlungsschritt (5.4; 105.4) als erster Ladeparameter eine in der zweiten Datenverarbeitungseinrichtung (3) für die Verarbeitung der Versanddatenpakete maximal zur Verfügung stehende Speicherkapazität ermittelt wird,
   - in dem ersten Teilschritt (5.6, 5.7, 5.8, 5.9; 105.6, 105.7, 105.8, 105.9)

      - die Speicherkapazitätssumme aus der für die Speicherung des ersten Datenpakets erforderlichen ersten Speicherkapazität und der für die Speicherung des zweiten Datenpakets erforderlichen zweiten Speicherkapazität gebildet wird,
      - die Speicherkapazitätssumme mit der maximal zur Verfügung stehenden Speicherkapazität verglichen wird und
      - für den Fall einer die maximal zur Verfügung stehende Speicherkapazität übersteigenden Speicherkapazitätssumme ein neues erstes Datenpaket und eine neues zweites Datenpaket erzeugt wird, wobei die erste Datenteilmenge reduziert und/oder die Kompressionsrate bei der Erzeugung des zweiten Datenpakets erhöht wird.

18. Verfahren nach einem der Ansprüche 11 bis 17, **dadurch gekennzeichnet, dass** in einem ersten Optimierungsschritt (105.36)

   - in einem ersten Optimierungsteilschritt (105.38) eine dritte Abschätzung der ersten Gesamtladezeit der ersten Daten bei einer Aufteilung der ersten Daten in erste Datenpakete der Größe der ersten Datenteilmenge erfolgt,
   - in einem zweiten Optimierungsteilschritt (105.40) eine Variation der ersten Datenteilmenge erfolgt,
   - in einem dritten Optimierungsteilschritt (105.38) die dritte Abschätzung mit ersten Datenpaketen der Größe der neuen ersten Datenteilmenge wiederholt wird,
   - in einem vierten Optimierungsteilschritt (105.39) die ermittelte neue erste Gesamtladezeit in einem ersten Gesamtladezeitvergleich mit der ermittelten vorherigen ersten Gesamtladezeit verglichen wird.

19. Verfahren nach Anspruch 18, **dadurch gekennzeichnet, dass** in dem ersten Optimierungsschritt (105.36)

   - in einem fünften Optimierungsteilschritt (105.40) zur Reduzierung der ersten Gesamtladezeit eine weitere Variation der ersten Datenteilmenge in Abhängigkeit von dem Ergebnis des ersten Gesamtladezeitvergleichs erfolgt und
   - in einem sechsten Optimierungsteilschritt zumindest der vierte Optimierungsteilschritt (105.39) wiederholt wird.

20. Verfahren nach Anspruch 19, **dadurch gekennzeichnet, dass** der fünfte und sechste Optimierungsteilschritt (105.40, 105.39) so lange wiederholt werden, bis sich die erste Gesamtladezeit mit einer vorgebbaren Toleranz an ein erstes Minimum angenähert hat.

21. Verfahren nach Anspruch 16, **dadurch gekennzeichnet, dass** in einem zweiten Optimierungsschritt (105.41)

   - in einem siebten Optimierungsteilschritt (105.43) eine vierte Abschätzung der zweiten Gesamtladezeit der ersten Daten bei einer Aufteilung der ersten Daten in zweite Datenpakete einer von der Größe der ersten Datenteilmenge abweichenden Größe erfolgt,
   - in einem achten Optimierungsteilschritt (105.45) eine Variation der ersten Datenteilmenge erfolgt,
   - in einem neunten Optimierungsteilschritt (105.43) die vierte Abschätzung mit zweiten Datenpaketen der Größe der neuen ersten Datenteilmenge wiederholt wird,
   - in einem zehnten Optimierungsteilschritt (105.44) die ermittelte neue Gesamtladezeit in einem zweiten Gesamtladezeitvergleich mit der ermittelten vorherigen zweiten Gesamtladezeit verglichen wird.

**22.** Verfahren nach Anspruch 21, **dadurch gekennzeichnet, dass** in dem zweiten Optimierungsschritt (105.41)

- in einem elften Optimierungsteilschritt (105.45) zur Reduzierung der zweiten Gesamtladezeit eine weitere Variation der ersten Datenteilmenge in Abhängigkeit von dem Ergebnis des zweiten Gesamtladezeitvergleichs erfolgt und
- in einem zwölften Optimierungsteilschritt zumindest der zehnte Optimierungsteilschritt (105.44) wiederholt wird.

**23.** Verfahren nach Anspruch 22, **dadurch gekennzeichnet, dass** der elfte und zwölfte Optimierungsteilschritt (105.45, 105.44) so lange wiederholt werden, bis sich die zweite Gesamtladezeit mit einer vorgebbaren Toleranz an ein zweites Minimum angenähert hat.

**24.** Verfahren nach Anspruch 20 und 23, **dadurch gekennzeichnet, dass** das erste Minimum und das zweite Minimum in einem dreizehnten Optimierungsteilschritt (105.11, 105.12, 105.13) miteinander verglichen werden und als Versanddatenpaket das Datenpaket mit der geringsten Gesamtladezeit ausgewählt wird.

**25.** Verfahren zum Laden von ersten Daten von einer ersten Datenverarbeitungseinrichtung (2, 6) über eine erste Datenverbindung (4, 7) in eine zweite Datenverarbeitungseinrichtung (3), bei dem die ersten Daten in einem Aufbereitungsschritt (5.3; 105.3) für das Laden aufbereitet werden und in einem Ladeschritt (5.17; 105.17) in die zweite Datenverarbeitungseinrichtung (3) geladen werden, wobei die Aufbereitung der ersten Daten in dem Aufbereitungsschritt (5.3; 105.3) mit einem Verfahren nach einem der vorhergehenden Ansprüche erfolgt.

**26.** Verfahren nach Anspruch 25, **dadurch gekennzeichnet, dass** das jeweilige Versanddatenpaket

- in dem Aufbereitungsschritt (5.3; 105.3) mit einer Paketbeschreibung versehen wird und
- in dem Ladeschritt (5.17; 105.17) nach dem Empfang in der zweiten Datenverarbeitungseinrichtung (3) in Abhängigkeit von der Paketbeschreibung verarbeitet wird.

**27.** Anordnung zum Laden von Daten von einer ersten Datenverarbeitungseinrichtung (2, 6) in eine zweite Datenverarbeitungseinrichtung (3), mit

- einer ersten Datenverarbeitungseinrichtung (2, 6) und
- einer über eine erste Datenverbindung (4, 7) mit der ersten Datenverarbeitungseinrichtung (2, 6) verbindbaren zweiten Datenverarbeitungseinrichtung (3),

wobei

- die erste Datenverarbeitungseinrichtung (2, 6) zum Erzeugen einer Mehrzahl von versandfertigen Versanddatenpaketen aus den in die zweite Datenverarbeitungseinrichtung (3) zu ladenden ersten Daten ausgebildet ist,
- die erste Datenverarbeitungseinrichtung (2, 6) zur Ermittlung wenigstens eines die Gesamtladezeit bis zum vollständigen Laden der ersten Daten in die zweite Datenverarbeitungseinrichtung (3) beeinflussenden ersten Ladeparameters ausgebildet ist und
- die erste Datenverarbeitungseinrichtung (2, 6) zur Erzeugung der Versanddatenpakete in Abhängigkeit von dem ersten Ladeparameter ausgebildet ist,

**dadurch gekennzeichnet, dass**

- die erste Datenverarbeitungseinrichtung (2, 6) zur Ermittlung eines Ladeparameters der zweiten Datenverarbeitungseinrichtung (3) als dem ersten Ladeparameter ausgebildet ist.

**28.** Anordnung nach Anspruch 27, **dadurch gekennzeichnet, dass** die erste Datenverarbeitungseinrichtung (2, 6) zur Ermittlung

- einer in der zweiten Datenverarbeitungseinrichtung (3) für die Verarbeitung der Versanddatenpakete maximal zur Verfügung stehenden Speicherkapazität als erstem Ladeparameter und/oder
- eines für die Verarbeitungsgeschwindigkeit der Versanddatenpakete in der zweiten Datenverarbeitungseinrichtung (3) repräsentativen Verarbeitungsgeschwindigkeitswerts als erstem Ladeparameter und/oder
- eines für die Übertragungsgeschwindigkeit zwischen der ersten und zweiten Datenverarbeitungseinrichtung (2, 6, 3) repräsentativen Übertragungsgeschwindigkeitswerts als weiterem Ladeparameter und/oder

- eines für den Typ der ersten Daten repräsentativen Datentypwerts als weiterem Ladeparameter

ausgebildet ist.

**29.** Anordnung nach Anspruch 27 oder 28, **dadurch gekennzeichnet, dass**

- die erste Datenverarbeitungseinrichtung (2, 6) einen ersten Speicher (2.3, 6.3) aufweist, in dem eine Mehrzahl erster Ladeparameter gespeichert sind und
- die erste Datenverarbeitungseinrichtung (2, 6) zum Auslesen des wenigstens einen ersten Ladeparameters in Abhängigkeit von der zweiten Datenverarbeitungseinrichtung (3) aus dem ersten Speicher (2.3, 6.3) ausgebildet ist und/oder
- die erste Datenverarbeitungseinrichtung (2, 6) zum Auslesen eines weiteren Ladeparameters in Abhängigkeit von der ersten Datenverbindung (4, 7) aus dem ersten Speicher (2.3, 6.3) ausgebildet ist.

**30.** Anordnung nach Anspruch 27 oder 28, **dadurch gekennzeichnet, dass** die erste Datenverarbeitungseinrichtung (2, 6) zur Ermittlung des wenigstens einen Ladeparameters

- zum Bilden eines ersten Testdatenpakets aus einer ersten Testdatenmenge ausgebildet ist und
- zum Übermitteln des ersten Testdatenpakets an die zweite Datenverarbeitungseinrichtung (3) ausgebildet ist.

**31.** Anordnung nach Anspruch 30, **dadurch gekennzeichnet, dass**

- die erste Datenverarbeitungseinrichtung (2, 6) und/oder die zweite Datenverarbeitungseinrichtung (3) zur Ermittlung der ersten Übermittlungszeit bis zum vollständigen Übermitteln des ersten Testdatenpakets an die zweite Datenverarbeitungseinrichtung (3) ausgebildet ist und
- die erste Datenverarbeitungseinrichtung (2, 6) und/oder die zweite Datenverarbeitungseinrichtung (3) zur Ermittlung eines für die Übertragungsgeschwindigkeit des ersten Testdatenpakets zwischen der ersten und zweiten Datenverarbeitungseinrichtung (2, 6, 3) repräsentativen ersten Übertragungsgeschwindigkeitswerts aus der ersten Übermittlungszeit ausgebildet ist.

**32.** Anordnung nach Anspruch 30 oder 31, **dadurch gekennzeichnet, dass**

- die erste Datenverarbeitungseinrichtung (2, 6) und/oder die zweite Datenverarbeitungseinrichtung (3) zur Ermittlung der ersten Verarbeitungszeit bis zum vollständigen Zurverfügungstellen des empfangenen ersten Testdatenpakets in der zweiten Datenverarbeitungseinrichtung (3) ausgebildet ist und
- die erste Datenverarbeitungseinrichtung (2, 6) und/oder die zweite Datenverarbeitungseinrichtung (3) zur Ermittlung eines für die Verarbeitungsgeschwindigkeit von ersten Datenpaketen in der zweiten Datenverarbeitungseinrichtung (3) repräsentativen ersten Verarbeitungsgeschwindigkeitswerts aus der ersten Verarbeitungszeit ausgebildet ist.

**33.** Anordnung nach einem der Ansprüche 30 bis 32, **dadurch gekennzeichnet, dass** die erste Datenverarbeitungseinrichtung (2, 6) zur Ermittlung des wenigstens einen Ladeparameters

- zum Bilden eines zweiten Testdatenpakets aus der ersten Testdatenmenge ausgebildet ist und
- zum Übermitteln des zweiten Testdatenpakets an die zweite Datenverarbeitungseinrichtung ausgebildet ist.

**34.** Anordnung nach Anspruch 33, **dadurch gekennzeichnet, dass**

- die erste Datenverarbeitungseinrichtung (2, 6) und/oder die zweite Datenverarbeitungseinrichtung (3) zur Ermittlung der zweiten Übermittlungszeit bis zum vollständigen Übermitteln des zweiten Testdatenpakets an die zweite Datenverarbeitungseinrichtung (3) ausgebildet ist und
- die erste Datenverarbeitungseinrichtung (2, 6) und/oder die zweite Datenverarbeitungseinrichtung (3) zur Ermittlung eines für die Übertragungsgeschwindigkeit des zweiten Testdatenpakets zwischen der ersten und zweiten Datenverarbeitungseinrichtung (2, 6, 3) repräsentativen zweiten Übertragungsgeschwindigkeitswerts aus der zweiten Übermittlungszeit ausgebildet ist.

**35.** Anordnung nach Anspruch 33 oder 34, **dadurch gekennzeichnet, dass**

- die erste Datenverarbeitungseinrichtung (2, 6) und/oder die zweite Datenverarbeitungseinrichtung (3) zur Ermittlung der zweiten Verarbeitungszeit bis zum vollständigen Zurverfügungstellen des empfangenen zweiten Testdatenpakets in der zweiten Datenverarbeitungseinrichtung (3) ausgebildet ist und

- die erste Datenverarbeitungseinrichtung (2, 6) und/oder die zweite Datenverarbeitungseinrichtung (3) zur Ermittlung eines für die Verarbeitungsgeschwindigkeit von zweiten Datenpaketen in der zweiten Datenverarbeitungseinrichtung (3) repräsentativen zweiten Verarbeitungsgeschwindigkeitswerts aus der zweiten Verarbeitungszeit ausgebildet ist.

36. Anordnung nach einem der Ansprüche 33 bis 35, **dadurch gekennzeichnet, dass** die erste Datenverarbeitungseinrichtung (2, 6) zur Erzeugung des zweiten Datenpakets unter Kompression der ersten Testdatenmenge ausgebildet ist.

37. Anordnung nach einem der Ansprüche 27 bis 36, **dadurch gekennzeichnet, dass** die erste Datenverarbeitungseinrichtung (2, 6)

- zur Erzeugung wenigstens eines ersten Datenpakets aus einer ersten Datenteilmenge der ersten Daten ausgebildet ist und
- zur Ermittlung einer ersten Abschätzung der ersten Ladezeit des ersten Datenpakets unter Verwendung des wenigstens einen ersten Ladeparameters ausgebildet ist.

38. Anordnung nach Anspruch 37, **dadurch gekennzeichnet, dass** die erste Datenverarbeitungseinrichtung (2, 6)

- zum Vergleichen der ermittelten ersten Ladezeit mit einem Ladezeitvergleichswert in einem Ladezeitvergleich ausgebildet ist und
- zur Auswahl des ersten Datenpakets als Versanddatenpaket in Abhängigkeit von dem Ergebnis des Ladezeitvergleichs ausgebildet ist.

39. Anordnung nach Anspruch 38, **dadurch gekennzeichnet, dass** die erste Datenverarbeitungseinrichtung (2, 6)

- zur Erzeugung eines zweiten Datenpakets aus der ersten Datenteilmenge ausgebildet ist und
- zur Ermittlung einer zweiten Abschätzung der zweiten Ladezeit des zweiten Datenpakets unter Verwendung des wenigstens einen ersten Ladeparameters ausgebildet ist.

40. Anordnung nach Anspruch 39, **dadurch gekennzeichnet, dass** die erste Datenverarbeitungseinrichtung (2, 6)

- zur Verwendung der zweiten Ladezeit als Ladezeitvergleichswert ausgebildet ist und
- zur Auswahl des ersten Datenpakets oder des zweiten Datenpakets als Versanddatenpaket in Abhängigkeit von dem Ergebnis des Ladezeitvergleichs ausgebildet ist.

41. Anordnung nach Anspruch 40, **dadurch gekennzeichnet, dass** die erste Datenverarbeitungseinrichtung (2, 6) zur Auswahl desjenigen Datenpakets mit der kleineren Ladezeit als Versanddatenpaket ausgebildet ist.

42. Anordnung nach einem der Ansprüche 39 bis 41, **dadurch gekennzeichnet, dass** die erste Datenverarbeitungseinrichtung (2, 6) zur Erzeugung des zweiten Datenpakets unter Kompression der ersten Datenteilmenge ausgebildet ist.

43. Anordnung nach Anspruch 42, **dadurch gekennzeichnet, dass** die erste Datenverarbeitungseinrichtung (2, 6)

- zur Ermittlung einer in der zweiten Datenverarbeitungseinrichtung (3) für die Verarbeitung der Versanddatenpakete maximal zur Verfügung stehenden Speicherkapazität als erstem Ladeparameter ausgebildet ist,
- zur Bildung der Speicherkapazitätssumme aus der für die Speicherung des ersten Datenpakets erforderlichen ersten Speicherkapazität und der für die Speicherung des zweiten Datenpakets erforderlichen zweiten Speicherkapazität ausgebildet ist,
- zum Vergleich der Speicherkapazitätssumme mit der maximal zur Verfügung stehenden Speicherkapazität ausgebildet ist und
- zum Erzeugen eines neuen ersten Datenpakets und eines neuen zweiten Datenpakets für den Fall einer die maximal zur Verfügung stehende Speicherkapazität übersteigenden Speicherkapazitätssumme ausgebildet ist, wobei sie zur Reduzierung der ersten Datenteilmenge und/oder zur Erhöhung der Kompressionsrate bei der Erzeugung des zweiten Datenpakets ausgebildet ist.

**44.** Anordnung nach einem der Ansprüche 27 bis 43, **dadurch gekennzeichnet, dass** die erste Datenverarbeitungseinrichtung (2, 6) zur Optimierung der ersten Gesamtladezeit der ersten Daten bei einer Aufteilung der ersten Daten in erste Datenpakete der Größe der ersten Datenteilmenge ausgebildet ist.

**45.** Anordnung nach Anspruch 44, **dadurch gekennzeichnet, dass** die erste Datenverarbeitungseinrichtung (2, 6) zur Optimierung der zweiten Gesamtladezeit der ersten Daten bei einer Aufteilung der ersten Daten in zweite Datenpakete einer von der Größe der ersten Datenteilmenge abweichenden Größe ausgebildet ist.

**46.** Anordnung nach Anspruch 45, **dadurch gekennzeichnet, dass** die erste Datenverarbeitungseinrichtung (2, 6)

- zum Vergleich der optimierten erste Gesamtladezeit und der optimierten zweiten Gesamtladezeit ausgebildet ist und
- zur Auswahl des Datenpakets mit der geringsten Gesamtladezeit als Versanddatenpaket ausgebildet ist.

**47.** Anordnung nach einem der Ansprüche 27 bis 46, **dadurch gekennzeichnet, dass**

- die erste Datenverarbeitungseinrichtung (2, 6) zum Versehen des jeweiligen Versanddatenpakets mit einer Paketbeschreibung ausgebildet ist und
- die zweite Datenverarbeitungseinrichtung (3) zur Verarbeitung des jeweiligen Versanddatenpakets in Abhängigkeit von der Paketbeschreibung ausgebildet ist.

**48.** Anordnung nach einem der Ansprüche 27 bis 47, **dadurch gekennzeichnet, dass** die erste Datenverarbeitungseinrichtung ein Personalcomputer (2) oder eine Datenzentrale (6) ist und/oder die zweite Datenverarbeitungseinrichtung eine Frankiermaschine (3) ist.

**49.** Datenverarbeitungseinrichtung, **dadurch gekennzeichnet, dass** sie als erste Datenverarbeitungseinrichtung (2, 6) für eine Anordnung (1) nach einem der Ansprüche 27 bis 48 ausgebildet ist.

**50.** Datenverarbeitungseinrichtung, **dadurch gekennzeichnet, dass** sie als zweite Datenverarbeitungseinrichtung (3) für eine Anordnung (1) nach einem der Ansprüche 27 bis 48 ausgebildet ist.

**Claims**

**1.** Method for preparing data for loading from a first data processing device (2, 6) into a second data processing device (3) via a first data connection (4, 7), in which

- in at least one packetizing step (5.5; 105.5) a plurality of transmission data packets which are ready for transmission are generated from the first data which is to be loaded into the second data processing device (3), wherein
- in a determination step (5.4; 105.4) preceding the packetizing step (5.5; 105.5), at least one first load parameter is determined which influences the total load time up to complete loading of the first data into the second data processing device (2) and
- the transmission data packets are generated in the at least one packetizing step (5.5; 105.5) as a function of the first load parameter,

**characterised in that**

- a load parameter of the second data processing device (3) is determined as the first load parameter.

**2.** Method according to Claim 1, **characterised in that** in the determination step (5.4; 105.4)

- a maximum storage capacity available in the second processing device (3) for processing the transmission data packets is determined as a first load parameter and/or
- a processing speed value representing the processing speed of the transmission data packets in the second processing device (3) is determined as a first load parameter and/or

- a transfer speed value representing the transfer speed between the first and second data processing devices (2, 6, 3) is determined as a further load parameter and/or

- a data type value representing the type of the first data is determined as a further load parameter.

3. Method according to Claim 1 or 2, **characterised in that** in the at least one first load parameter is read from a first memory (2.3) of the first processing device (3) as a function of the second data processing device (3) and/or a further load parameter is read from a first memory (2.3) of the first data processing device (2) as a function of the first data connection (4, 7).

4. Method according to Claim 1 or 2, **characterised in that** in the determination step (5.4; 105.4) in a first test step (5.21) at least one first test data packet is formed from a first quantity of test data and is transmitted to the second data processing device (3) in order to determine the at least one load parameter.

5. Method according to Claim 4, **characterised in that** in the first test step (5.21)

- the first transmission time up to complete transmission of the first test data packet to the second data processing device (3) is determined and

- from the first transmission time a first transfer speed value representing the transfer speed of the first test data packet between the first and second data processing devices (2, 6, 3) is determined as a first load parameter.

6. Method according to Claim 4 or 5, **characterised in that**

- in a second test step (5.25) the first processing time up to the received first test data packet being made completely available in the second data processing device (3) is determined and

- from the first processing time a first processing speed value representing the processing speed of first data packets in the second data processing device (3) is determined as a first load parameter.

7. Method according to any one of Claims 4 to 6, **characterised in that** in the determination step (5.4; 105.4) in a third test step (5.28) a second test data packet is formed from the first quantity of test data and is transmitted to the second data processing device (3) in order to determine the at least one load parameter.

8. Method according to Claim 7, **characterised in that** in the third test step (5.28)

- the second transmission time up to complete transmission of the second test data packet to the second data processing device (3) is determined and

- from the second transmission time a second transfer speed value representing the transfer speed of the second test data packet between the first and second data processing devices (2, 6, 3) is determined as a first load parameter.

9. Method according to Claim 7 or 8, **characterised in that**

- in a fourth test step (5.32) the second processing time up to the received second test data packet being made completely available in the second data processing device (3) is determined and

- from the second processing time a second processing speed value representing the processing speed of second data packets in the second data processing device (3) is determined as a first load parameter.

10. Method according to any one of Claims 7 to 9, **characterised in that** the second test data packet is generated in the third test step (5.28) by compressing the first quantity of test data.

11. Method according to any one of the preceding claims, **characterised in that** in the at least one packetizing step (5.5; 105.5)

- in a first sub-step (5.6, 5.7, 5.8, 5.9; 105.6, 105.7, 105.8, 105.9) at least one first data packet is generated from a first data subset of the first data,

- in a second sub-step (5.10; 105.10) using the at least one first load parameter for the first data packet a first estimation of the first load time of the first data packet takes place.

12. Method according to Claim 11, **characterised in that**

- in a third sub-step (5.11; 105.11) the first load time determined in the second sub-step (5.10; 105.10) in a load time comparison is compared to a load time comparison value and
- in a fourth sub-step (5.12, 5.13; 105.12, 105.13) the first data packet is selected as a transmission data packet as a function of the result of the load time comparison.

13. Method according to Claim 12, **characterised in that**

- in the first sub-step (5.6, 5.7, 5.8, 5.9; 105.6, 105.7, 105.8, 105.9) a second data packet is generated from the first data subset,
- in the second sub-step (5.10; 105.10) using the at least one first load parameter for the second data packet a second estimation of the second load time of the second data packet takes place.

14. Method according to Claim 13, **characterised in that**

- in the third sub-step (5.11; 105.11) the second load time determined in the second sub-step (5.10; 105.10) is used as a load time comparison value and
- in the fourth sub-step (5.12, 5.13; 105.12, 105.13) the first data packet or the second data packet is selected as a transmission data packet as a function of the result of the load time comparison.

15. Method according to Claim 14, **characterised in that** in the fourth sub-step (5.12, 5.13; 105.12, 105.13) that data packet with the shorter load time is selected as a transmission data packet.

16. Method according to any one of Claims 13 to 15, **characterised in that** the second data packet is generated in the first sub-step (5.6, 5.7, 5.8, 5.9; 105.6, 105.7, 105.8, 105.9) by compressing the first data subset.

17. Method according to Claim 16, **characterised in that**

- in the determination step (5.4; 105.4) a maximum storage capacity available in the second data processing device (3) for processing the transmission data packets is determined as a first load parameter,
- in the first sub-step (5.6, 5.7, 5.8, 5.9; 105.6, 105.7, 105.8, 105.9)

  - the storage capacity sum is formed from the first storage capacity required for storing the first data packet and from the second storage capacity required for storing the second data packet,
  - the storage capacity sum is compared to the maximum storage capacity available and
  - in the case where the storage capacity sum exceeds the maximum storage capacity available, a new first data packet and a new second data packet are generated, wherein the first data subset is reduced and/or the compression rate when generating the second data packet is increased.

18. Method according to any one of Claims 11 to 17, **characterised in that** in a first optimisation step (105.36)

- in a first optimisation sub-step (105.38) a third estimation of the first total load time of the first data takes place in the case of the first data being divided into first data packets of the size of the first data subset,
- in a second optimisation sub-step (105.40) a variation of the first data subset takes place,
- in a third optimisation sub-step (105.38) the third estimation is repeated with first data packets of the size of the new first data subset,
- in a fourth optimisation sub-step (105.39) the determined new first total load time is compared, in a first total load time comparison, to the determined previous first total load time.

19. Method according to Claim 18, **characterised in that** in the first optimisation step (105.36)

- in a fifth optimisation sub-step (105.40), in order to reduce the first total load time, a further variation of the first data subset takes place as a function of the result of the first total load time comparison and
- in a sixth optimisation sub-step at least the fourth optimisation sub-step (105.39) is repeated.

20. Method according to Claim 19, **characterised in that** the fifth and sixth optimisation sub-steps (105.40, 105.39) are repeated until the first total load time with a pre-settable tolerance approximates to a first minimum.

21. Method according to Claim 16, **characterised in that** in a second optimisation step (105.41)

- in a seventh optimisation sub-step (105.43) a fourth estimation of the second total load time of the first data takes place in the case of the first data being divided into second data packets of a size deviating from the size of the first data subset,
- in an eighth optimisation sub-step (105.45) a variation of the first data subset takes place,
- in a ninth optimisation sub-step (105.43) the fourth estimation is repeated with second data packets of the size of the new first data subset,
- in a tenth optimisation sub-step (105.44) the determined new total load time is compared, in a second total load time comparison, to the determined previous second total load time.

22. Method according to Claim 21, **characterised in that** in the second optimisation step (105.41)

- in an eleventh optimisation sub-step (105.45), in order to reduce the second total load time, a further variation of the first data subset takes place as a function of the result of the second total load time comparison and
- in a twelfth optimisation sub-step at least the tenth optimisation sub-step (105.44) is repeated.

23. Method according to Claim 22, **characterised in that** in the eleventh and twelfth optimisation sub-steps (105.45, 105.44) are repeated until the second total load time with a pre-settable tolerance approximates to a second minimum.

24. Method according to Claims 20 and 23, **characterised in that** in the first minimum and the second minimum are compared to one another in a thirteenth optimisation sub-step (105.11, 105.12, 105.13) and the data packet with the shortest total load time is selected as the transmission data packet.

25. Method for loading first data from a first data processing device (2, 6) into a second data processing device (3) via a first data connection (4, 7), in which the first data is prepared for the loading process in a preparation step (5.3; 105.3) and is loaded into the second processing device (3) in a load step (5.17; 105.17), wherein the preparation of the first data takes place in the preparation step (5.3; 105.3) using a method according to any one of the preceding claims.

26. Method according to Claim 25, **characterised in that** the respective transmission data packet

- is provided with a packet description in the preparation step (5.3; 105.3) and
- is processed in the load step (5.17; 105.17) after being received in the second data processing device (3) as a function of the packet description.

27. Arrangement for loading data from a first data processing device (2, 6) into a second data processing device (3), having

- a first data processing device (2, 6) and
- a second data processing device (3) which can be connected to the first data processing device (2, 6) via a first data connection (4, 7),

wherein

- the first data processing device (2, 6) is designed to generate a plurality of transmission data packets ready for transmission from the first data which is to be loaded into the second data processing device (3),
- the first data processing device (2, 6) is designed to determine at least one first load parameter which influences the total load time up to complete loading of the first data into the second data processing device (3) and
- the first data processing device (2, 6) is designed to generate the transmission data packets as a function of the first load parameter,

**characterised in that**

- the first data processing device (2, 6) is designed to determine a load parameter of the second data processing device (3) as the first load parameter.

28. Arrangement according to Claim 27, **characterised in that** the first data processing device (2, 6) is designed to determine

- a maximum storage capacity available in the second data processing device (3) for processing the transmission data packets as a first load parameter and/or
- a processing speed value representing the processing speed of the transmission data packets in the second data processing device (3) as a first load parameter and/or
- a transfer speed value representing the transfer speed between the first and second data processing devices (2, 6, 3) as a further load parameter and/or
- a data type value representing the data type of the first data as a further load parameter.

**29.** Arrangement according to Claim 27 or 28, **characterised in that**

- the first data processing device (2, 6) has a first memory (2.3, 6.3), in which a plurality of first load parameters are stored and
- the first data processing device (2, 6) is designed to read the at least one first load parameter as a function of the second processing device (3) from the first memory (2.3, 6.3) and/or
- the first data processing device (2, 6) is designed to read a further load parameter as a function of the first data connection (4, 7) from the first memory (2.3, 6.3).

**30.** Arrangement according to Claim 27 or 28, **characterised in that**, in order to determine the at least one load parameter, the first data processing device (2, 6) is designed

- to form a first test data packet from a first quantity of test data and is designed
- to transmit the first test data packet to the second data processing device (3).

**31.** Arrangement according to Claim 30, **characterised in that**

- the first data processing device (2, 6) and/or the second data processing device (3) is designed to determine the first transmission time up to complete transmission of the first test data packet to the second data processing device (3) and
- the first data processing device (2, 6) and/or the second data processing device (3) is designed to determine from the first transmission time a first transfer speed value representing the transfer speed of the first test data packet between the first and second data processing devices (2, 6, 3).

**32.** Arrangement according to Claim 30 or 31, **characterised in that**

- the first data processing device (2, 6) and/or the second data processing device (3) is designed to determine the first processing time up to the received first test data packet being made completely available in the second data processing device (3) and
- the first data processing device (2, 6) and/or the second data processing device (3) is designed to determine from the first processing time a first processing speed value representing the processing speed of first data packets in the second data processing device (3).

**33.** Arrangement according to any one of Claims 30 to 32, **characterised in that**, in order to determine the at least one load parameter, the first data processing device (2, 6) is designed

- to form a second test data packet from the first quantity of test data and
- to transmit the second test data packet to the second data processing device (3).

**34.** Arrangement according to Claim 33, **characterised in that**

- the first data processing device (2, 6) and/or the second data processing device (3) is designed to determine the second transmission time up to complete transmission of the second test data packet to the second data processing device (3) and
- the first data processing device (2, 6) and/or the second data processing device (3) is designed to determine from the second transmission time a transfer speed value representing the transfer speed of the second test data packet between the first and second data processing devices (2, 6, 3).

**35.** Arrangement according to Claim 33 or 34, **characterised in that**

- the first data processing device (2, 6) and/or the second data processing device (3) is designed to determine the second processing time up to the received second test data packet being made completely available in the second data processing device (3) and
- the first data processing device (2, 6) and/or the second data processing device (3) is designed to determine from the second processing time a second processing speed value representing the processing speed of second data packets in the second data processing device (3).

36. Arrangement according to any one of Claims 33 to 35, **characterised in that** the first data processing device (2, 6) is designed to generate the second data packet by compressing the first quantity of test data.

37. Arrangement according to any one of Claims 27 to 36, **characterised in that** the first data processing device (2, 6) is designed

- to generate at least one first data packet from a first data subset of the first data and is designed
- to determine a first estimation of the first load time of the first data packet using the at least one first load parameter.

38. Arrangement according to Claim 37, **characterised in that** the first data processing device (2, 6) is designed

- to compare in a load time comparison the determined first load time to a load time comparison value and
- to select the first data packet as a transmission data packet as a function of the result of the load time comparison.

39. Arrangement according to Claim 38, **characterised in that** the first data processing device (2, 6) is designed

- to generate a second data packet from the first data subset and is designed
- to determine a second estimation of the second load time of the second data packet using the at least one first load parameter.

40. Arrangement according to Claim 39, **characterised in that** the first data processing device (2, 6) is designed

- to use the second load time as a load time comparison value and
- to select the first data packet or the second data packet as a transmission data packet as a function of the result of the load time comparison.

41. Arrangement according to Claim 40, **characterised in that** the first data processing device (2, 6) is designed to select that data packet with the shorter load time as a transmission data packet.

42. Arrangement according to any one of Claims 39 to 41, **characterised in that** the first data processing device (2, 6) is designed to generate the second data packet by compressing the first data subset.

43. Arrangement according to Claim 42, **characterised in that** the first data processing device (2, 6) is designed

- to determine a maximum storage capacity available in the second data processing device (3) for processing the transmission data packets as a first load parameter, is designed
- to form the storage capacity sum from the first storage capacity required for storing the first data packet and from the second storage capacity required for storing the second data packet, is designed
- to compare the storage capacity sum to the maximum storage capacity available and
- to generate in the case where a storage capacity sum exceeds the maximum storage capacity available, a new first data packet and a new second data packet, wherein it is designed to reduce the first data subset and/or to increase the compression rate when generating the second data packet.

44. Arrangement according to any one of Claims 27 to 43, **characterised in that** the first data processing device (2, 6) is designed to optimise the first total load time of the first data in the case of the first data being divided into first data packets of the size of the first data subset.

45. Arrangement according to Claim 44, **characterised in that** the first data processing device (2, 6) is designed to optimise the second total load time of the first data in the case of the first data being divided into second data packets of a size deviating from the size of the first data subset.

**46.** Arrangement according to Claim 45, **characterised in that** the first data processing device (2, 6) is designed

- to compare the optimised first total load time and the optimised second total load time and
- to select the data packet with the shortest total load time as the transmission data packet.

**47.** Arrangement according to any one of Claims 27 to 46, **characterised in that**

- the first data processing device (2, 6) is designed to provide the respective transmission data packet with a packet description and
- the second data processing device (3) is designed to process the respective transmission data packet as a function of the packet description.

**48.** Arrangement according to any one of Claims 27 to 47, **characterised in that** the first data processing device is a personal computer (2) or a data centre (6) and/or the second data processing device is a franking machine (3).

**49.** Data processing device, **characterised in that** it is designed as a first data processing device (2, 6) for an arrangement (1) according to any one of Claims 27 to 48.

**50.** Data processing device, **characterised in that** it is designed as a second data processing device (3) for an arrangement (1) according to any one of Claims 27 to 48.

**Revendications**

**1.** Procédé destiné à la préparation de données pour le chargement à partir d'un premier dispositif de traitement de données (2, 6) par l'intermédiaire d'une première connexion de données (4, 7) dans un deuxième dispositif de traitement de données (3), lors duquel

- l'on génère, dans au moins une étape de paquétisation (5.5; 105.5), une multitude de paquets de données à envoyer prêts à l'envoi à partir des premières données devant être chargées dans le deuxième dispositif de traitement de données (3), où
- l'on détermine, dans une étape de détermination (5.4; 105.4) précédente à l'étape de paquétisation (5.5; 105.5), au moins un premier paramètre de charge influençant le temps total de chargement jusqu'au chargement complet des premières données dans le deuxième dispositif de traitement de données (2), et
- l'on génère les paquets de données à envoyer dans au moins une étape de paquétisation (5.5; 105.5) en fonction du premier paramètre de charge.

**caractérisé en ce que**

- l'on détermine un paramètre de charge du deuxième dispositif de traitement de données (3) en tant que premier paramètre de charge.

**2.** Procédé selon la revendication 1, **caractérisé en ce que**, dans l'étape de détermination (5.4; 105.4),

- l'on détermine en tant que premier paramètre de charge une capacité mémoire étant au maximum à disposition dans le deuxième dispositif de traitement de données (3) pour le traitement des paquets de données à envoyer, et/ou
- l'on détermine en tant que premier paramètre de charge une valeur de vitesse de traitement représentative de la vitesse de traitement des paquets de données à envoyer dans le deuxième dispositif de traitement de données (3), et/ou
- l'on détermine en tant que paramètre de charge ultérieur une valeur de vitesse de transmission représentative de la vitesse de transmission entre le premier et le deuxième dispositif de traitement de données (2, 6, 3), et/ou
- l'on détermine en tant que paramètre de charge ultérieur la valeur représentative du type de données pour le type des premières données.

**3.** Procédé selon la revendication 1 ou 2, **caractérisé en ce que** l'on extrait au moins un premier paramètre de charge en fonction du deuxième dispositif de traitement de données (3) à partir d'une première mémoire (2.3) du premier dispositif de traitement de données (2) et/ou l'on extrait un autre paramètre de charge en fonction de la première connexion de données (4, 7) à partir d'une première mémoire (2.3) du premier dispositif de traitement de données (2).

4. Procédé selon la revendication 1 ou 2, **caractérisé en ce que** l'on forme dans l'étape de détermination (5.4; 105.4) dans une première étape d'essai (5.21) au moins un premier paquet de données d'essai à partir d'une première quantité de données d'essai et l'on transmet celui-ci au deuxième dispositif de traitement de données (3) pour déterminer l'au moins un paramètre de charge.

5. Procédé selon la revendication 4, **caractérisé en ce que** dans la première étape d'essai (5.21)

   - l'on détermine la première durée de transmission jusqu'à la transmission intégrale du premier paquet de données d'essai au deuxième dispositif de traitement de données (3), et
   - l'on détermine à partir de la première durée de transmission une première valeur de vitesse de transmission représentative de la vitesse de transmission du premier paquet de données d'essai entre le premier et le deuxième dispositif de traitement de données (2, 6, 3) en tant que premier paramètre de charge.

6. Procédé selon la revendication 4 ou 5, **caractérisé en ce que**

   - l'on détermine dans une deuxième étape d'essai (5.25) la première durée de traitement jusqu'à la fourniture intégrale du premier paquet de données d'essai reçu dans le deuxième dispositif de traitement de données (3), et
   - l'on détermine, à partir de la première durée de traitement, une première valeur de vitesse de traitement représentative de la vitesse de traitement des premiers paquets de données dans le deuxième dispositif de traitement de données (3) en tant que premier paramètre de charge.

7. Procédé selon une des revendications 4 à 6, **caractérisé en ce que** l'on forme un deuxième paquet de données d'essai dans l'étape de détermination (5.4; 105.4) dans une troisième étape d'essai (5.28) à partir de la première quantité de données d'essai et qu'on le transmet au deuxième dispositif de traitement de données (3) pour déterminer au moins un paramètre de charge.

8. Procédé selon la revendication 7, **caractérisé en ce que** dans la troisième étape d'essai (5.28)

   - l'on détermine la deuxième durée de transmission jusqu'à la transmission intégrale du deuxième paquet de données d'essai au deuxième dispositif de traitement de données (3), et
   - l'on détermine, à partir de la deuxième durée de traitement, une deuxième valeur de vitesse de transmission représentative de la vitesse de transmission du deuxième paquet de données d'essai entre le premier et le deuxième dispositif de traitement de données (2, 6, 3) en tant que premier paramètre de charge.

9. Procédé selon la revendication 7 ou 8, **caractérisé en ce que**

   - l'on détermine dans une quatrième étape d'essai (5.32) la deuxième durée de traitement jusqu'à la fourniture intégrale du deuxième paquet de données d'essai reçu dans le deuxième dispositif de traitement de données (3), et
   - l'on détermine, à partir de la deuxième durée de traitement, une deuxième valeur de vitesse de traitement représentative de la vitesse de traitement des deuxièmes paquets de données dans le deuxième dispositif de traitement de données (3) en tant que premier paramètre de charge.

10. Procédé selon une des revendications 7 à 9, **caractérisé en ce que** l'on génère le deuxième paquet de données d'essai dans la troisième étape d'essai (5.28) par compression de la première quantité de données d'essai.

11. Procédé selon une des revendications précédentes, **caractérisé en ce que** dans l'au moins une étape de paquétisation (5.5; 105.5)

   - l'on génère au moins un premier paquet de données dans une première étape partielle (5.6, 5.7, 5.8, 5.9; 105.6, 105.7, 105.8, 105.9) à partir d'une première quantité partielle de données des premières données,
   - l'on établit dans une deuxième étape partielle (5.10; 105.10), en utilisant au moins un premier paramètre de charge pour le premier paquet de données, une première estimation de la première durée de charge du premier paquet de données.

12. Procédé selon la revendication 11, **caractérisé en ce que**

- l'on compare dans une troisième étape partielle (5.11; 105.11) le premier temps de chargement déterminé dans la deuxième étape partielle (5.10; 105.10) dans une comparaison du temps de chargement avec une valeur comparative du temps de chargement et
- il se produit dans une quatrième étape partielle (5.12, 5.13; 105.12, 105.13), en fonction du résultat de la comparaison du temps de chargement, une sélection du premier paquet de données en tant que paquet de données à envoyer.

**13.** Procédé selon la revendication 12, **caractérisé en ce que**

- l'on génère un deuxième paquet de données dans une première étape partielle (5.6, 5.7, 5.8, 5.9; 105.6, 105.7, 105.8, 105.9) à partir d'une première quantité partielle de données,
- une deuxième estimation du deuxième temps de chargement du deuxième paquet de données est effectuée dans la deuxième étape partielle (5.10; 105.10) en utilisant au moins un premier paramètre de charge pour le deuxième paquet de données.

**14.** Procédé selon la revendication 13, **caractérisé en ce que**

- l'on utilise dans une troisième étape partielle (5.11 ; 105.11 le deuxième temps de chargement déterminé dans la deuxième étape partielle (5.10; 105.10) en tant que valeur comparative du temps de chargement et
- il se produit dans la quatrième étape partielle (5.12, 5.13; 105.12, 105.13), en fonction du résultat de la comparaison du temps de chargement, une sélection du premier paquet de données ou du deuxième paquet de données en tant que paquet de données à envoyer.

**15.** Procédé selon la revendication 14, **caractérisé en ce que** l'on sélectionne dans la quatrième étape partielle (5.12, 5.13; 105.12, 105.13) le paquet de données comportant le temps de chargement le plus bref en tant que paquet de données à envoyer.

**16.** Procédé selon une des revendications 13 à 15, **caractérisé en ce que** l'on génère le deuxième paquet de données dans la première étape partielle (5.6, 5.7, 5.8, 5.9; 105.6, 105.7, 105.8, 105.9) par compression de la première quantité partielle de données.

**17.** Procédé selon la revendication 16, **caractérisé en ce que**

- l'on détermine dans l'étape de détermination (5.4; 105.4) une capacité maximale de mémoire à disposition dans le deuxième dispositif de traitement de données (3) pour le traitement des paquets de données à envoyer en tant que premier paramètre de charge,
- dans la première étape partielle (5.6, 5.7, 5.8, 5.9; 105.6, 105.7, 105.8, 105.9)

- l'on établit la somme des capacités de mémoire à partir de la première capacité mémoire nécessaire à la mémorisation du premier paquet de données et de la deuxième capacité mémoire nécessaire à la mémorisation du deuxième paquet de données,
- la somme des capacités de mémoire est comparée à la capacité maximale de mémoire à disposition, et
- l'on génère un nouveau premier paquet de données et un nouveau deuxième paquet de données lorsque la somme des capacités de mémoire excède la capacité maximale de mémoire à disposition, où la première quantité partielle de données est réduite et/ou le taux de compression est augmenté lors de la génération du deuxième paquet de données.

**18.** Procédé selon une des revendications 11 à 17, **caractérisé en ce que** dans une première étape d'optimisation (105.36)

- il se produit dans une première étape partielle d'optimisation (105.38) une troisième estimation du premier temps total de chargement des premières données lors d'une répartition des premières données dans les premiers paquets de données ayant la taille de la première quantité partielle de données,
- il se produit dans une deuxième étape partielle d'optimisation (105.40) une variation de la première quantité partielle de données,
- l'on répète dans une troisième étape partielle d'optimisation (105.38) la troisième estimation avec des premiers paquets de données ayant la dimension de la nouvelle première quantité partielle de données,
- l'on compare dans une quatrième étape partielle d'optimisation (105.39) le nouveau premier temps total de chargement déterminé dans une première comparaison du temps total de chargement avec le premier temps total de chargement précédemment déterminé.

**19.** Procédé selon la revendication 18, **caractérisé en ce que** dans la première étape d'optimisation (105.36)

- se produit dans une cinquième étape partielle d'optimisation (105.40), pour réduire le temps total de chargement, une autre variation de la première quantité partielle des données en fonction du résultat de la première comparaison du temps total de chargement, et
- l'on répète dans une sixième étape partielle d'optimisation au moins la quatrième étape partielle d'optimisation (105.39).

**20.** Procédé selon la revendication 19, **caractérisé en ce que** la cinquième et la sixième étape partielle d'optimisation (105.40, 105.39) sont répétées jusqu'à ce que le premier temps total de chargement se rapproche d'un premier minimum dans des limites de tolérance prédéterminées.

**21.** Procédé selon la revendication 16, **caractérisé en ce que** dans une deuxième étape d'optimisation (105.41)

- se produit dans une septième étape partielle d'optimisation (105.43) une quatrième estimation du deuxième temps total de chargement des premières données lors d'une répartition des premières données dans des deuxièmes paquets de données d'une dimension divergente de la dimension de la première quantité de partielle de données,
- il se produit dans une huitième étape partielle d'optimisation (105.45) une variation de la première quantité partielle de données,
- l'on répète, dans la neuvième étape partielle d'optimisation (105.43), la quatrième estimation avec des deuxièmes paquets de données de la taille de la nouvelle première quantité partielle de données,
- l'on compare dans une dixième étape partielle d'optimisation (105.44) le temps total de chargement déterminé dans une deuxième comparaison du temps total de chargement avec le deuxième temps de chargement précédemment déterminé.

**22.** Procédé selon la revendication 21, **caractérisé en ce que** dans la deuxième étape d'optimisation (105.41)

- se produit dans une onzième étape partielle d'optimisation (105.45), pour réduire le deuxième temps total de chargement, une autre variation du premier temps total de chargement en fonction du résultat de la comparaison de la deuxième comparaison du temps total de chargement, et
- l'on répète dans une douzième étape partielle d'optimisation au moins la dixième étape d'optimisation (105.44).

**23.** Procédé selon la revendication 22, **caractérisé en ce que** la onzième et la douzième étape partielle d'optimisation (105.45, 105.44) sont répétées jusqu'à ce que le deuxième temps total de chargement se rapproche d'un deuxième minimum dans des limites de tolérance prédéterminées.

**24.** Procédé selon la revendication 20 et 23, **caractérisé en ce que** l'on compare le premier minimum et le deuxième minimum dans une treizième étape d'optimisation (105.11, 105.12, 105.13) et que l'on choisit en tant que paquet de données à envoyer le paquet de données présentant le temps total de chargement le plus bref.

**25.** Procédé pour le chargement des premières données à partir d'un premier dispositif de traitement de données (2, 6) par l'intermédiaire d'une première connexion de données (4, 7) dans un deuxième dispositif de traitement de données (3), dans le cadre duquel l'on prépare les premières données pour leur chargement dans une étape de préparation (5.3; 105.3) et on les charge dans le deuxième dispositif de traitement de données (3) dans une étape de chargement (5.17; 105.17), où la préparation des premières données se produit dans une étape de préparation (5.3; 105.3) en utilisant un procédé selon une des revendications précédentes.

**26.** Procédé selon la revendication 25, **caractérisé en ce que** le paquet de données respectif à envoyer

- est muni d'un descriptif de paquet pendant l'étape de préparation (5.3; 105.3), et
- est traité dans l'étape de chargement (5.17; 105.17) après réception dans le deuxième dispositif de traitement de données (3) en fonction du descriptif du paquet.

**27.** Arrangement pour le chargement de données à partir d'un premier dispositif de traitement de données (2, 6) dans un deuxième dispositif de traitement de données (3), avec

- un premier dispositif de traitement de données (2, 6), et
- un deuxième dispositif de traitement de données (3) pouvant être relié au premier dispositif de traitement de données (2, 6) par l'intermédiaire d'une connexion de données (4, 7),

où

- le premier dispositif de traitement de données (2, 6) est conçu pour générer une multitude de paquets de données à envoyer prêts à l'envoi à partir des premières données à charger dans le deuxième dispositif de traitement de données (3),
- le premier dispositif de traitement de données (2, 6) est conçu pour déterminer au moins un premier paramètre de charge influençant le temps total de chargement jusqu'au chargement complet des premières données dans le deuxième dispositif de traitement de données (3), et
- le premier dispositif de traitement de données (2, 6) est conçu pour générer les paquets de données à envoyer en fonction du premier paramètre de charge,

**caractérisé en ce que**

- le premier dispositif de traitement de données (2, 6) est conçu pour déterminer un paramètre de charge du deuxième dispositif de traitement de données (3) en tant que premier paramètre de charge.

**28.** Arrangement selon la revendication 27, **caractérisé en ce que** le premier dispositif de traitement de données (2, 6) est conçu pour déterminer

- une capacité maximale de mémoire à disposition dans le deuxième dispositif de traitement de données (3) pour le traitement des paquets de données à envoyer en tant que premier paramètre de charge, et/ou
- une valeur de vitesse de traitement représentative de la vitesse de traitement des paquets de données à envoyer dans le deuxième dispositif de traitement de données (3) en tant que premier paramètre de charge, et/ou
- une valeur de vitesse de transmission représentative de la vitesse de transmission entre le premier et le deuxième dispositif de traitement de données (2, 6, 3) en tant que paramètre de charge ultérieur, et/ou
- une valeur de type de données représentative du type des premières données en tant que paramètre de charge ultérieur.

**29.** Arrangement selon la revendication 27 ou 28, **caractérisé en ce que**

- le premier dispositif de traitement de données (2, 6) présente une première mémoire (2.3, 6.3), dans laquelle est mémorisée une multitude de premiers paramètres de charge, et
- le premier dispositif de traitement de données (2, 6) est conçu pour extraire à partir de la première mémoire (2.3, 6.3) au moins un premier paramètre de charge en fonction du deuxième dispositif de traitement de données (3), et/ou
- le premier dispositif de traitement de données (2, 6) est conçu pour extraire à partir de la première mémoire (2.3, 6.3) un paramètre de charge ultérieur en fonction de la première connexion de données (4, 7).

**30.** Arrangement selon la revendication 27 ou 28, **caractérisé en ce que** le premier dispositif de traitement de données (2, 6), pour déterminer au moins un paramètre de charge,

- est conçu pour former un premier paquet de données d'essai à partir d'une première quantité de données d'essai, et
- est conçu pour transmettre le premier paquet de données d'essai au deuxième dispositif de traitement de données (3).

**31.** Arrangement selon la revendication 30, **caractérisé en ce que**

- le premier dispositif de traitement de données (2, 6) et/ou le deuxième dispositif de traitement de données (3) est conçu pour déterminer la première durée de transmission jusqu'à la transmission intégrale du premier paquet de données d'essai au deuxième dispositif de traitement de données (3), et
- le premier dispositif de traitement de données (2, 6) et/ou le deuxième dispositif de traitement de données (3) sont conçus pour déterminer une première valeur de vitesse de transmission représentative de la vitesse de transmission du premier paquet de données d'essai entre le premier et le deuxième dispositif de traitement de données (2, 6, 3) à partir de la première durée de transmission.

**32.** Arrangement selon la revendication 30 ou 31, **caractérisé en ce que**

- le premier dispositif de traitement de données (2, 6) et/ou le deuxième dispositif de traitement de données (3) est conçu pour déterminer la première durée de traitement jusqu'à la fourniture intégrale du premier paquet de données d'essai reçu dans le deuxième dispositif de traitement de données (3), et
- le premier dispositif de traitement de données (2, 6) et/ou le deuxième dispositif de traitement de données (3) sont conçus pour déterminer une première valeur de vitesse de traitement représentative de la vitesse de traitement du premier paquet de données dans le deuxième dispositif de traitement de données (3) à partir de la première durée de traitement.

**33.** Arrangement selon une des revendications de 30 à 32, **caractérisé en ce que** le premier dispositif de traitement de données (2, 6), pour déterminer au moins un paramètre de charge,

- est conçu pour former un deuxième paquet de données d'essai à partir de la première quantité de données d'essai, et
- est conçu pour transmettre le deuxième paquet de données d'essai au deuxième dispositif de traitement de données.

**34.** Arrangement selon la revendication 33, **caractérisé en ce que**

- le premier dispositif de traitement de données (2, 6) et/ou le deuxième dispositif de traitement de données (3) est conçu pour déterminer la deuxième durée de transmission jusqu'à la transmission intégrale du deuxième paquet de données d'essai au deuxième dispositif de traitement de données (3), et
- le premier dispositif de traitement de données (2, 6) et/ou le deuxième dispositif de traitement de données (3) est conçu pour déterminer une deuxième valeur de vitesse de transmission représentative de la vitesse de transmission du deuxième paquet de données d'essai entre le premier et le deuxième dispositif de traitement de données (2, 6, 3) à partir de la deuxième durée de transmission.

**35.** Arrangement selon la revendication 33 ou 34, **caractérisé en ce que**

- le premier dispositif de traitement de données (2, 6) et/ou le deuxième dispositif de traitement de données (3) est conçu pour déterminer la deuxième durée de traitement jusqu'à la fourniture intégrale du deuxième paquet de données d'essai reçu dans le deuxième dispositif de traitement de données (3), et
- le premier dispositif de traitement de données (2, 6) et/ou le deuxième dispositif de traitement de données (3) est conçu pour déterminer une deuxième valeur de vitesse de traitement représentative de la vitesse de traitement du deuxième paquet de données d'essai dans le deuxième dispositif de traitement de données (3) à partir de la deuxième durée de traitement.

**36.** Arrangement selon une des revendications 33 à 35, **caractérisé en ce que** le premier dispositif de traitement de données (2, 6) est conçu pour générer le deuxième paquet de données par compression de la première quantité de données d'essai.

**37.** Arrangement selon une des revendications 27 à 36, **caractérisé en ce que** le premier dispositif de traitement de données (2, 6)

- est conçu pour générer au moins un premier paquet de données à partir d'une première quantité partielle de données des premières données, et
- est conçu pour établir une première estimation du premier temps de chargement du premier paquet de données en utilisant l'au moins un premier paramètre de charge.

**38.** Arrangement selon la revendication 37, **caractérisé en ce que** le premier dispositif de traitement de données (2, 6)

- est conçu pour comparer le premier temps de chargement déterminé avec une valeur comparative de durée de chargement dans une comparaison du temps de chargement, et

- est conçu pour sélectionner le premier paquet de données en tant que paquet de données à envoyer en fonction du résultat de la comparaison du temps de chargement.

**39.** Arrangement selon la revendication 38, **caractérisé en ce que** le premier dispositif de traitement de données (2, 6)

- est conçu pour générer un deuxième paquet de données à partir de la première quantité partielle de données, et
- est conçu pour déterminer une deuxième estimation du deuxième temps de chargement du deuxième paquet de données en utilisant l'au moins un premier paramètre de charge.

**40.** Arrangement selon la revendication 39, **caractérisé en ce que** le premier dispositif de traitement de données (2, 6)

- est conçu pour utiliser le deuxième temps de chargement en tant que valeur comparative du temps de chargement, et
- est conçu pour sélectionner le premier paquet de données ou le deuxième paquet de données en tant que paquet de données à envoyer en fonction du résultat de la comparaison du temps de chargement.

**41.** Arrangement selon la revendication 40, **caractérisé en ce que** le premier dispositif de traitement de données (2, 6) est conçu pour sélectionner le paquet de données avec le temps de chargement le plus bref en tant que paquet à envoyer.

**42.** Arrangement selon une des revendications 39 à 41, **caractérisé en ce que** le premier dispositif de traitement de données (2, 6) est conçu pour générer le deuxième paquet de données par compression de la première quantité partielle de données.

**43.** Arrangement selon la revendication 42, **caractérisée en ce que** le premier dispositif de traitement de données (2, 6)

- est conçu pour déterminer une capacité maximale de mémoire à disposition dans le deuxième dispositif de traitement de données (3) pour le traitement des paquets de données à envoyer en tant que premier paramètre de charge,
- est conçu pour l'établissement de la somme des capacités de mémoire à partir de la première capacité de mémoire nécessaire pour mémoriser le premier paquet de données et de la deuxième capacité de mémoire nécessaire pour mémoriser le deuxième paquet de données,
- est conçu pour comparer la somme des capacités de mémoire avec la capacité maximale de mémoire à disposition, et
- est conçu pour générer un nouveau premier paquet de données et un nouveau deuxième paquet de données lorsqu'une somme des capacités de mémoire excède la capacité maximale de mémoire à disposition, où elle est conçue pour réduire la première quantité partielle de données et/ou pour augmenter le taux de compression lors de la génération du deuxième paquet de données.

**44.** Arrangement selon une des revendications 27 à 43, **caractérisé en ce que** le premier dispositif de traitement de données (2, 6) est conçu pour optimiser le premier temps total de chargement des premières données lors d'une répartition des premières données dans les premiers paquets de données de la taille de la première quantité partielle des données.

**45.** Arrangement selon la revendication 44, **caractérisé en ce que** le premier dispositif de traitement de données (2, 6) est conçu pour optimiser le deuxième temps total de chargement des premières données lors d'une répartition des premières données dans les deuxièmes paquets de données d'une taille différente de celle de la première quantité partielle de données.

**46.** Arrangement selon la revendication 45, **caractérisé en ce que** le premier dispositif de traitement de données (2, 6)

- est conçu pour comparer le premier temps total de chargement optimisé et le deuxième temps de chargement optimisé, et
- est conçu pour sélectionner le paquet de données avec le temps total de chargement le plus bref en tant que paquet de données à envoyer.

**47.** Arrangement selon une des revendications 27 à 46, **caractérisé en ce que**

- le premier dispositif de traitement de données (2, 6) est conçu pour doter le paquet de données respectif à envoyer d'un descriptif de paquet et

- le deuxième dispositif de traitement de données (3) est conçu pour traiter le paquet de données respectif à envoyer en fonction du descriptif de paquet.

48. Arrangement selon une des revendications 27 à 47, **caractérisé en ce que** le premier dispositif de traitement de données est un ordinateur personnel (2) ou une base de données (6) et/ou que le deuxième dispositif de traitement de données est une machine à affranchir (3).

49. Dispositif de traitement de données, **caractérisé en ce qu'**il est conçu en tant que premier dispositif de traitement de données (3) pour un arrangement (1) selon une des revendications 27 à 48.

50. Dispositif de traitement de données, **caractérisé en ce qu'**il est conçu en tant que deuxième dispositif de traitement de données (3) pour un arrangement (1) selon une des revendications 27 à 48.

Fig. 1

5.1 — START

5.2 — Daten laden? (J / N)

5.4 — Ermittlung Ladeparameter

5.6 — erstes Datenpaket (n) aus Datenteilmenge

5.7 — zweites Datenpaket (n') aus Datenteilmenge

5.9 — Reduktion Datenteilmenge

5.8 — $n + n' \leq m$? (J / N)

5.10 — Abschätzung erste Ladezeit $T(n)$ und zweite Ladezeit $T(n')$

5.5

5.11 — $T(n) \leq T(n')$? (J / N)

5.3

5.12 — Auswahl erstes Datenpaket als Versanddatenpaket

5.13 — Auswahl zweites Datenpaket als Versanddatenpaket

5.14 — Paketbeschreibung Versanddatenpaket

5.16 — Bildung weiteres Versanddatenpaket

5.15 — Weiteres Datenpaket? (N / J)

5.17 — Versanddaten-pakete laden

5.18 — Stop? (J / N)

5.19 — STOP

Fig. 2

Fig. 3

| 5.20 | Ermittlung maximaler Speicherplatz m |
| 5.22 | Erstes Test- datenpaket aus erster Testdatenmenge |
| 5.23 | Messung erste Übermittlungszeit | 5.21 |
| 5.24 | Bestimmung erste Übertragungs- geschwindigkeit |
| 5.26 | Messung erste Verarbeitungszeit |
| 5.27 | Bestimmung erste Verarbeitungs- geschwindigkeit | 5.25 |
| | | 5.4 |
| 5.29 | Zweites Test- datenpaket aus erster Testdatenmenge |
| 5.30 | Messung zweite Übermittlungszeit | 5.28 |
| 5.31 | Bestimmung zweite Übertragungs- geschwindigkeit |
| 5.33 | Messung zweite Verarbeitungszeit |
| 5.34 | Bestimmung zweite Verarbeitungs- geschwindigkeit | 5.32 |
| 5.35 | Ermittlung Datentypwert |

105.1 — START

105.2

J — Daten laden? — N

105.4 — Ermittlung Ladeparameter

105.6 — erstes Datenpaket (n) aus Datenteilmenge

105.7 — zweites Datenpaket (n') aus Datenteilmenge

Reduktion Datenteilmenge — 105.9

105.8

J — $n + n' \leq m$? — N

105.10 — Abschätzung und Optimierung erste und zweite Gesamtlade-zeit $T_g(n)$, $T_g(n')$

105.5

105.3

105.11

J — $T_g(n) \leq T_g(n')$? — N

105.12 — Auswahl erstes Datenpaket als Versanddatenpaket

Auswahl zweites Datenpaket als Versanddatenpaket — 105.13

105.14 — Paketbeschreibung Versanddatenpaket

Bildung weiteres Versanddatenpaket — 105.16

105.15

9

N — Weiteres Datenpaket? — J

105.17 — Versanddaten-pakete laden

105.18

J — Stop? — N

105.19 — STOP

Fig. 4

105.37 — Abschätzung erste Ladezeit

105.38 — Abschätzung erste Gesamtladezeit

105.39 — J — Minimum Gesamtladezeit? — N

Variation erste Datenteilmenge — 105.40

105.36

105.10

105.42 — Abschätzung zweite Ladezeit

105.43 — Abschätzung zweite Gesamtladezeit

105.44 — J — Minimum Gesamtladezeit? — N

Variation erste Datenteilmenge — 105.45

105.41

Fig. 5